# EUROPEAN PATENT APPLICATION

(11) **EP 4 852 340 A1**
(43) Date of publication of application: **09.12.2026**
(21) Application number: 24928227.8
(22) Date of filing: 19.12.2024
(51) Int. Cl.: H04B 7/185

(54) **SATELLITE COMMUNICATION METHOD AND SYSTEM, AND ELECTRONIC DEVICE**

(30) Priority: 07.03.2024 CN 202410267144
(71) Applicant: HUAWEI TECHNOLOGIES CO., LTD., Shenzhen, Guangdong 518129 (CN)
(72) Inventor: WANG, Wei, Shenzhen, Guangdong 518129 (CN); LU, Wei, Shenzhen, Guangdong 518129 (CN); LI, Xiaojin, Shenzhen, Guangdong 518129 (CN); TONG, Huan, Shenzhen, Guangdong 518129 (CN)
(74) Representative: Huawei European IPR
(86) International application number: PCT/CN2024/140647
(87) International publication number: WO 2025/185298

(57) **Abstract**

Embodiments of this application provide a satellite communication method and system, and an electronic device, to expand application scenarios of satellite communication on portable electronic devices. In the method, a satellite communication capability of a second electronic device can be registered with a first electronic device based on a distributed communication network established by a plurality of electronic devices, which may also be understood as that the satellite communication capability of the second electronic device is used as distributed virtualized hardware of the first electronic device. Therefore, the first electronic device can have the same satellite communication capability as the second electronic device by invoking the satellite communication capability of the second electronic device, so that a satellite link between the first electronic device and a satellite can be established in more application scenarios, thereby expanding the satellite communication capability of the first electronic device.

## Description

### CROSS-REFERENCE TO RELATED APPLICATIONS

This application claims priority to Chinese Patent Application No. 202410267144.7, filed with the China National Intellectual Property Administration on March 7, 2024 and entitled "SATELLITE COMMUNICATION METHOD AND SYSTEM, AND ELECTRONIC DEVICE", which is incorporated herein by reference in its entirety.

### TECHNICAL FIELD

This application relates to the field of terminal technologies, and in particular, to a satellite communication method and system, and an electronic device.

### BACKGROUND

As functions of portable electronic devices are gradually improved and enriched, users use the portable electronic devices more frequently in daily life. In addition, with the development of satellite communication technologies, satellite communication may be applied to more scenarios. Therefore, how to expand application scenarios of satellite communication on the portable electronic devices has very important research significance.

Currently, many portable electronic devices still cannot support a satellite communication service function.

Alternatively, even if some portable electronic devices such as mobile phones can support a satellite communication service function, because satellite communication strongly depends on a satellite antenna technology, and due to constraints such as a mobile phone size and a satellite antenna miniaturization technology, a satellite signal receiving/sending range of a satellite antenna integrated on the mobile phone is limited. For example, the antenna supports only a satellite signal receiving/sending range of ±15°. Consequently, before using a mobile phone to perform satellite communication, a user needs to perform manual operations such as satellite searching and satellite alignment, resulting in problems such as complex operations and inconvenient function use.

Alternatively, the satellite communication service function of the portable electronic device may be unavailable due to some anomalies.

### SUMMARY

This application provides a satellite communication method and system, and an electronic device, so that a first electronic device can invoke a satellite communication capability of a second electronic device based on a distributed communication network, thereby expanding satellite communication application scenarios. For example, a device having a relatively weak satellite communication capability can invoke a satellite communication capability of a device having a relatively strong satellite communication capability in the distributed communication network, so as to support more satellite communication application scenarios of the device having the relatively weak satellite communication capability.

According to a first aspect, an embodiment of this application provides a satellite communication method. The method may be applied to a first electronic device. The method includes: detecting a first operation on a first control included in a first interface, where the first control is used to trigger the first electronic device to perform satellite communication; and sending, in response to the first operation on a satellite link established between the first electronic device and a satellite, a first satellite communication packet to the satellite by invoking a satellite communication capability of a second electronic device, where the satellite communication capability includes a signal modulation capability and a satellite antenna capability.

In the method, the first electronic device may invoke the satellite communication capability of the second electronic device, to expand more satellite communication scenarios. For example, in a scenario in which a satellite communication capability of the first electronic device is weaker than the satellite communication capability of the second electronic device, the satellite communication capability of the second electronic device is invoked, so that the first electronic device can have the same satellite communication capability as the second electronic device. For example, in a scenario in which the satellite communication capability of the second electronic device includes an omnidirectional satellite communication capability, the first electronic device may also have an omnidirectional satellite communication capability, so that a user does not need to perform a manual operation such as satellite alignment on the first electronic device, and satellite communication can be performed in various device postures of the first electronic device. For another example, in a scenario in which a satellite communication function of the first electronic device is abnormal because a satellite antenna of the first electronic device is abnormal, the satellite communication capability of the second electronic device may be invoked, so that the first electronic device can implement the satellite communication function by using the satellite communication capability of the second electronic device. Therefore, the method can expand application scenarios in which the first electronic device performs satellite communication, to meet requirements of more scenarios in which the first electronic device performs satellite communication.

In a possible design, the satellite communication capability of the first electronic device and the satellite communication capability of the second electronic device may belong to any one of the following several scenarios:
Scenario 1: A frequency range supported by the signal modulation capability of the second electronic device is greater than a frequency range supported by a signal modulation capability of the first electronic device.

Scenario 2: A satellite signal receiving/sending range supported by the satellite antenna capability of the second electronic device is greater than a satellite signal receiving/sending range supported by a satellite antenna capability of the first electronic device.

Scenario 3: A frequency range supported by the signal modulation capability of the second electronic device is greater than a frequency range supported by a signal modulation capability of the first electronic device, and a satellite signal receiving/sending range supported by the satellite antenna capability of the second electronic device is greater than a satellite signal receiving/sending range supported by a satellite antenna capability of the first electronic device.

In this design, in a scenario in which the satellite communication capability of the first electronic device is weaker than the satellite communication capability of the second electronic device, the first electronic device can have the same satellite communication capability as the second electronic device by invoking the satellite communication capability of the second electronic device.

In another possible implementation, a first operation on a first control included in a first interface is detected, where the first control is used to trigger the first electronic device to perform satellite communication; and a second satellite communication packet is sent to a second electronic device in response to the first operation, where the second satellite communication packet is sent to a satellite after being modulated by the second electronic device into a first satellite communication packet. It may be understood that the second electronic device has a satellite communication capability, and the satellite communication capability includes a signal modulation capability and a satellite antenna capability. In a possible design, the second satellite communication packet is an encapsulated and unmodulated packet.

In a possible design, sending, in response to the first operation on the satellite link established between the first electronic device and the satellite, the first satellite communication packet to the satellite by invoking the satellite communication capability of the second electronic device includes: obtaining communication data in response to the first operation; encapsulating the communication data to obtain the first satellite communication packet; and sending the first satellite communication packet to the satellite via a satellite antenna after modulating the first satellite communication packet by using the signal modulation capability.

In this design, after obtaining the satellite communication packet through encapsulation, the first electronic device may invoke the satellite communication capability of the second electronic device to modulate the satellite communication packet, and then send the modulated satellite communication packet to the satellite. In this way, the satellite communication capability of the second electronic device is used as a distributed satellite communication capability of the first electronic device, so that the satellite communication capability of the first electronic device can be expanded, and the first electronic device has the same satellite communication capability as the second electronic device, or the first electronic device uses the satellite communication capability of the second electronic device. Therefore, application scenarios in which the first electronic device performs satellite communication with the satellite can be improved, to meet requirements of more scenarios in which the first electronic device performs satellite communication.

In a possible design, before detecting the first operation on the first control included in the first interface, the method further includes: establishing a first communication link with the second electronic device; and receiving first indication information from the second electronic device based on the first communication link, where the first indication information is used to register the satellite communication capability with the first electronic device.

In this design, a registration request of the satellite communication capability of the second electronic device may be received through the first communication link established with the second electronic device, so that the first electronic device can invoke the satellite communication capability of the second electronic device after the satellite communication capability of the second electronic device is registered.

In a possible design, the method further includes: invoking the satellite communication capability of the second electronic device based on the first communication link to send a satellite request message to the satellite, where the satellite request message is used to request to establish the satellite link with the satellite; and when receiving an acknowledgment message from the satellite based on the first communication link by using the satellite communication capability of the second electronic device, determining that the satellite link is successfully established between the first electronic device and the satellite.

In this design, the first electronic device may invoke the satellite communication capability of the second electronic device, so that the satellite link between the first electronic device and the satellite can be established by using the satellite communication capability of the second electronic device. In this way, scenarios in which the first electronic device performs satellite communication with the satellite can be improved, to meet requirements of more scenarios in which the first electronic device performs satellite communication.

In a possible design, establishing the first communication link with the second electronic device includes: establishing a second communication link with an intelligent cockpit, where a third communication link is established between the intelligent cockpit and the second electronic device, and the first communication link includes the second communication link and the third communication link; and receiving the first indication information from the second electronic device based on the first communication link includes: receiving an indication message from the intelligent cockpit through the second communication link, and obtaining the first indication information from the indication message, where the first indication information is received by the intelligent cockpit through the third communication link.

In this design, the first electronic device may not only directly establish a communication link with the second electronic device, but also establish a communication link with the second electronic device via at least one other device such as the intelligent cockpit. In this way, the first electronic device can invoke the satellite communication capability of the second electronic device through the communication link with the second electronic device.

In a possible design, the method further includes: detecting successful establishment of the satellite link, and displaying the first interface in response to the successful establishment.

In this design, the first electronic device may update, by invoking the satellite communication capability of the second electronic device, a related interface that includes satellite communication content on the first electronic device. For example, the first interface may be an updated interface, and the first interface may not include the first control before being updated. It should be noted that an updated related interface is not limited in this application.

In a possible design, the first interface further includes prompt information, and the prompt information includes one or a combination of the following information: second indication information indicating that the satellite link is successfully established, information about a quantity of locked satellites, and satellite signal strength information.

In this design, the prompt information is displayed on the first electronic device, so that the user can learn of related information about satellite communication performed by the first electronic device.

In a possible design, the first interface is a dialing interface, the dialing interface includes the first control, and the first control indicates to perform a satellite call.

In this design, the first electronic device can implement dialing requests in more scenarios by invoking the communication capability of the second electronic device, so that the user can better use satellite communication.

In a possible design, the dialing interface further includes a second control, and the second control indicates to perform a cellular network call.

In this design, when the first electronic device performs a satellite call, a cellular network call is not affected. In addition, a plurality of call manners are provided, so that the user can conveniently select a call manner, to meet requirements of more call scenarios of the user.

In this design, the first electronic device can have the same satellite communication capability as the second electronic device by invoking the satellite communication capability of the second electronic device, thereby improving the satellite communication capability of the first electronic device. Alternatively, when the satellite communication capability of the first electronic device is abnormal, the satellite communication function of the first electronic device can be ensured by invoking the satellite communication capability of the second electronic device.

According to a second aspect, an embodiment of this application further provides a satellite communication method. The method may be applied to a first electronic device. The method includes: receiving a second satellite communication packet from a satellite on a satellite link by using a satellite communication capability of a second electronic device, where the second satellite communication packet is a packet received via a satellite antenna and demodulated by using a signal demodulation capability; and displaying a second interface based on the second satellite communication packet, where the second interface is used to display information indicated by the second satellite communication packet.

In the method, based on the satellite communication capability of the second electronic device, the first electronic device can not only expand scenarios of initiating satellite communication, but also expand scenarios of receiving satellite communication,. Therefore, more scenarios in which a user performs satellite communication via the first electronic device can be supported.

In a possible design, a satellite communication capability of the first electronic device and the satellite communication capability of the second electronic device may belong to any one of the following several scenarios:
Scenario 1: A frequency range supported by the signal modulation capability of the second electronic device is greater than a frequency range supported by a signal modulation capability of the first electronic device.

Scenario 2: A satellite signal receiving/sending range supported by the satellite antenna capability of the second electronic device is greater than a satellite signal receiving/sending range supported by a satellite antenna capability of the first electronic device.

Scenario 3: A frequency range supported by the signal modulation capability of the second electronic device is greater than a frequency range supported by a signal modulation capability of the first electronic device, and a satellite signal receiving/sending range supported by the satellite antenna capability of the second electronic device is greater than a satellite signal receiving/sending range supported by a satellite antenna capability of the first electronic device.

In a possible design, displaying the second interface based on the second satellite communication packet includes: decapsulating the second satellite communication packet to obtain communication data; and displaying the second interface based on the communication data.

According to a third aspect, a satellite communication system is further provided. The system includes a first electronic device and a second electronic device. The first electronic device is configured to detect a first operation on a first control included in a first interface, where the first control is used to trigger the first electronic device to perform satellite communication; the first electronic device is further configured to invoke a satellite communication capability of the second electronic device in response to the first operation; and the second electronic device is configured to send, in response to invocation of the first electronic device, a first satellite communication packet to a satellite on a satellite link established between the first electronic device and the satellite, where the satellite communication capability includes a signal modulation capability and a satellite antenna capability.

In a possible design, a satellite communication capability of the first electronic device and the satellite communication capability of the second electronic device may belong to any one of the following several scenarios:
Scenario 1: A frequency range supported by the signal modulation capability of the second electronic device is greater than a frequency range supported by a signal modulation capability of the first electronic device.

Scenario 2: A satellite signal receiving/sending range supported by the satellite antenna capability of the second electronic device is greater than a satellite signal receiving/sending range supported by a satellite antenna capability of the first electronic device.

Scenario 3: A frequency range supported by the signal modulation capability of the second electronic device is greater than a frequency range supported by a signal modulation capability of the first electronic device, and a satellite signal receiving/sending range supported by the satellite antenna capability of the second electronic device is greater than a satellite signal receiving/sending range supported by a satellite antenna capability of the first electronic device.

In a possible design, the first electronic device is configured to: obtain communication data in response to the first operation; and encapsulate the communication data to obtain the first satellite communication packet; and the second electronic device is configured to send the first satellite communication packet to the satellite via a satellite antenna after modulating the first satellite communication packet by using the signal modulation capability.

In a possible design, before the first operation on the first control included in the first interface is detected, the first electronic device is further configured to establish a first communication link with the second electronic device; the second electronic device is further configured to send first indication information to the first electronic device based on the first communication link, where the first indication information is used to register the satellite communication capability with the first electronic device; and the first electronic device is further configured to receive the first indication information from the second electronic device based on the first communication link.

In a possible design, the first electronic device is configured to invoke the satellite communication capability of the second electronic device based on the first communication link; and the second electronic device is configured to send a satellite request message to the satellite in response to invocation of the first electronic device, where the satellite request message is used to request to establish the satellite link with the satellite. The second electronic device is further configured to: receive an acknowledgment message from the satellite, and send the acknowledgment message to the first electronic device based on the first communication link; and the first electronic device is further configured to: when receiving the acknowledgment message from the satellite based on the first communication link, determine that the satellite link is successfully established between the first electronic device and the satellite.

In a possible design, the system further includes an intelligent cockpit; the intelligent cockpit is configured to establish a third communication link with the second electronic device, the first electronic device is further configured to establish a second communication link with the intelligent cockpit, and the first electronic device is further configured to obtain the first communication link based on the third communication link and the second communication link; the second electronic device is configured to send the first indication information to the intelligent cockpit based on the third communication link, the intelligent cockpit is configured to receive the first indication information from the second electronic device based on the third communication link, and the intelligent cockpit is further configured to send an indication message to the first electronic device based on the first indication information and the second communication link, where the indication message includes the first indication information from the second electronic device; and the first electronic device is configured to receive the indication message from the intelligent cockpit based on the second communication link, and the first electronic device is further configured to obtain the first indication information from the indication message.

In a possible design, the first electronic device is further configured to: detect successful establishment of the satellite link, and display the first interface in response to the successful establishment.

In a possible design, the first interface further includes prompt information, and the prompt information includes one or a combination of the following information: second indication information indicating that the satellite link is successfully established, information about a quantity of locked satellites, and satellite signal strength information.

In a possible design, the first interface is a dialing interface, the dialing interface includes the first control, and the first control indicates to perform a satellite call.

In a possible design, the dialing interface further includes a second control, and the second control indicates to perform a cellular network call.

According to a fourth aspect, a satellite communication system is further provided. The system includes a first electronic device and a second electronic device. The second electronic device has a satellite communication capability, and the satellite communication capability includes a satellite antenna capability and a signal demodulation capability. The second electronic device is configured to: receive a second satellite communication packet from a satellite on a satellite link between the first electronic device and the satellite via a satellite antenna, and demodulate the second satellite communication packet by using the signal demodulation capability; and the first electronic device is further configured to: receive the second satellite communication packet from the second electronic device, and display a second interface based on the second satellite communication packet, where the second interface is used to display information indicated by the second satellite communication packet.

In a possible design, a satellite communication capability of the first electronic device and the satellite communication capability of the second electronic device may belong to any one of the following several scenarios:
Scenario 1: A frequency range supported by the signal modulation capability of the second electronic device is greater than a frequency range supported by a signal modulation capability of the first electronic device.

Scenario 2: A satellite signal receiving/sending range supported by the satellite antenna capability of the second electronic device is greater than a satellite signal receiving/sending range supported by a satellite antenna capability of the first electronic device.

Scenario 3: A frequency range supported by the signal modulation capability of the second electronic device is greater than a frequency range supported by a signal modulation capability of the first electronic device, and a satellite signal receiving/sending range supported by the satellite antenna capability of the second electronic device is greater than a satellite signal receiving/sending range supported by a satellite antenna capability of the first electronic device.

In a possible design, the first electronic device displays the second interface based on the second satellite communication packet, and is specifically configured to: decapsulate the second satellite communication packet to obtain communication data; and display the second interface based on the communication data.

According to a fifth aspect, an embodiment of this application further provides an electronic device. The electronic device includes a memory and one or more processors, the memory is configured to store computer program code, and the computer program code includes computer instructions; and when the computer instructions are executed by the processor, the electronic device is enabled to perform the method performed by the first electronic device according to any one of the possible designs of the first aspect, or the electronic device is enabled to perform the method performed by the first electronic device according to any one of the possible designs of the second aspect.

According to a sixth aspect, an embodiment of this application further provides an electronic device. The electronic device includes modules/units for performing the method according to any one of the possible designs of the first aspect or the second aspect. These modules/units may be implemented by hardware, or may be implemented by hardware executing corresponding software.

In some embodiments, the electronic device may include a communication module and a processing module. The processing module may be configured to detect a first operation on a first control included in a first interface, where the first control is used to trigger the first electronic device to perform satellite communication; the processing module may be further configured to invoke a satellite communication capability of a second electronic device in response to the first operation; and the communication module may be configured to send a first satellite communication packet to a satellite on a satellite link established between the first electronic device and the satellite, where the satellite communication capability includes a signal modulation capability and a satellite antenna capability.

In some other embodiments, the electronic device may include a communication module and a display module. The communication module may be configured to receive a second satellite communication packet from a satellite on a satellite link, where a satellite communication capability includes a signal demodulation capability and a satellite antenna capability, and the second satellite communication packet is a packet received via a satellite antenna of a second electronic device and demodulated by using the signal demodulation capability; and the display module may be configured to display a second interface based on the second satellite communication packet, where the second interface is used to display information indicated by the second satellite communication packet.

According to a seventh aspect, an embodiment of this application further provides a satellite communication system. The system may include the electronic device according to the fifth aspect or the sixth aspect and a second electronic device.

According to an eighth aspect, a computer-readable storage medium is provided. The computer-readable medium stores a computer program (which may also be referred to as code or instructions). When the computer program runs on a computer, the computer is enabled to perform the method according to any one of the possible designs of the first aspect or the method according to any one of the possible designs of the second aspect.

According to a ninth aspect, a computer program product is provided. The computer program product includes a computer program (which may also be referred to as code or instructions). When the computer program runs, a computer is enabled to perform the method according to any one of the possible designs of the first aspect or the method according to any one of the possible designs of the second aspect.

According to a tenth aspect, a graphical user interface on an electronic device is further provided. The electronic device includes a display, one or more memories, and one or more processors, the one or more processors are configured to execute one or more computer programs stored in the one or more memories, and the graphical user interface includes a graphical user interface displayed when a first electronic device performs any one of the possible designs of the first aspect of embodiments of this application; or the graphical user interface includes a graphical user interface displayed when a first electronic device performs any one of the possible designs of the second aspect of embodiments of this application.

According to an eleventh aspect, this application further provides a chip. The chip is configured to read a computer program stored in a memory, to perform the method performed by an electronic device according to any one of the foregoing aspects and the possible designs of the foregoing aspects.

According to a twelfth aspect, this application further provides a chip system. The chip system includes a processor, configured to support a computer apparatus in implementing the method performed by an electronic device according to any one of the foregoing aspects and the possible designs of the foregoing aspects. In a possible design, the chip system further includes a memory, and the memory is configured to store a program and data that are necessary for the computer apparatus. The chip system may include a chip, or may include a chip and another discrete component.

It should be noted that, for beneficial effects of the designs of the electronic device provided in the second aspect to the twelfth aspect of embodiments of this application, refer to beneficial effects of any possible design of the first aspect. Details are not described herein again.

### BRIEF DESCRIPTION OF DRAWINGS

FIG. 1 is a diagram of interfaces of satellite communication;
FIG. 2A is a diagram of possible partial hardware structures of a first electronic device 200A and a second electronic device 200B;
FIG. 2B is another diagram of possible partial hardware structures of a first electronic device 200A and a second electronic device 200B;
FIG. 3 is a block diagram of a software system architecture of an electronic device according to an embodiment of this application;
FIG. 4 is a diagram of a scenario to which a satellite communication method is applicable according to an embodiment of this application;
FIG. 5A and FIG. 5B are diagrams of interfaces of a satellite communication method according to an embodiment of this application;
FIG. 6 is a diagram of another scenario to which a satellite communication method is applicable according to an embodiment of this application;
FIG. 7A and FIG. 7B are a diagram 1 of a procedure of a satellite communication method according to an embodiment of this application;
FIG. 8A and FIG. 8B are a diagram 2 of a procedure of a satellite communication method according to an embodiment of this application; and
FIG. 9 is a diagram 3 of a procedure of a satellite communication method according to an embodiment of this application.

### DESCRIPTION OF EMBODIMENTS

The following describes in detail embodiments of this application with reference to accompanying drawings.

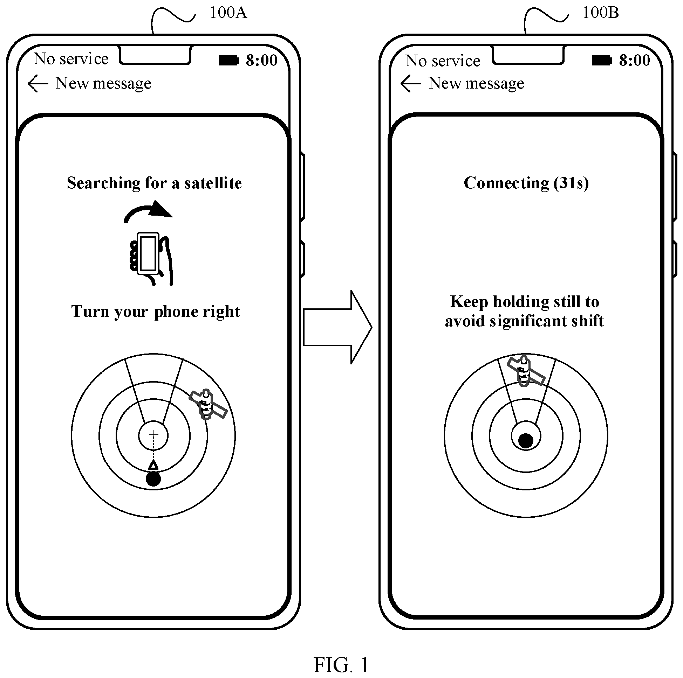

Several possible satellite communication scenarios are first described.
(1) A professional satellite communication terminal is used for satellite communication. The professional satellite communication terminal is usually configured with a thick external omnidirectional satellite antenna, so that a requirement of omnidirectional satellite communication can be met, and operations such as quickly searching for a satellite (which may also be briefly referred to as "satellite searching" in embodiments of this application), aligning a satellite, and locking a satellite (which may also be briefly referred to as "satellite locking" in embodiments of this application) can be implemented. However, the professional satellite communication terminal usually has poor portability and is relatively expensive.
(2) A portable electronic device may also be referred to as a portable terminal, a portable terminal device, or the like, such as a mobile phone, a PC, a tablet computer, a wearable device (for example, a watch or a band), an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). Alternatively, the portable electronic device may be another portable electronic device, for example, a laptop (laptop) computer with a touch-sensitive surface (for example, a touch panel).
   In some possible scenarios, a directional satellite antenna is integrated into the portable electronic device, so that the portable electronic device can have a satellite communication service function. However, on the basis that the portable electronic device is integrated with a directional satellite antenna, a user usually needs to perform complex manual operations such as satellite searching and satellite alignment, resulting in complex operations and inconvenient function use. For example, FIG. 1 is a diagram of interfaces of satellite communication. As shown in an interface 100A in FIG. 1, a user may be guided, through the interface, to perform a satellite searching operation, to align a directional satellite antenna integrated on a mobile phone with a satellite. For example, in the interface 100A, the user is guided, by using a text and a diagram, to turn the mobile phone right. As shown in an interface 100B in FIG. 1, based on a prompt in the interface, the mobile phone after an angle is adjusted is aligned with the satellite, and is establishing a connection to the satellite. It can be learned from the interface 100B that, in a process of establishing the connection to the satellite, the user needs to be prompted to keep holding still to avoid significant shift, thereby avoiding a connection establishment failure caused by a satellite signal loss. In addition, although not shown in FIG. 1, after the mobile phone successfully establishes the connection to the satellite, the current holding posture also needs to be kept to avoid significant shift, thereby avoiding disconnection of the established connection caused by a satellite signal loss.
(3) A vehicle-mounted satellite communication apparatus may be integrated into a vehicle-mounted communication device or a vehicle. The vehicle-mounted satellite communication apparatus, for example, a telematics box (T-BOX) having satellite communication, may implement deployment of an omnidirectional satellite antenna or a directional satellite antenna, thereby reducing manual operations such as manual satellite searching and satellite alignment required by a user. However, in a vehicle-mounted satellite communication scenario, an operation is usually performed on a vehicle-mounted central display, both a call and message editing have a problem of poor privacy, and it is inconvenient for a user in a rear row of the vehicle to operate the vehicle-mounted central display.

In view of this, embodiments of this application provide a satellite communication method. In the method, a first electronic device may establish a communication link with a second electronic device, which may also be understood as establishing a distributed communication network. Based on the distributed communication network established between the first electronic device and the second electronic device, the first electronic device may invoke a satellite communication capability of the second electronic device, to establish a satellite link with a satellite, so that scenarios in which the first electronic device performs satellite communication can be expanded. In this way, based on the distributed communication network and a distributed hardware virtualization technology, the first electronic device can have the same satellite communication capability as the second electronic device, to meet requirements of more scenarios in which the first electronic device performs satellite communication.

In an optional manner, the satellite communication capability of the second electronic device may include a signal modulation capability, a signal demodulation capability, and a satellite antenna capability. In another optional manner, the satellite communication capability of the second electronic device may include a signal modulation capability and a satellite antenna capability. In still another optional manner, the satellite communication capability of the second electronic device may include a signal demodulation capability and a satellite antenna capability.

The method provided in embodiments of this application may be applied to the field of terminal technologies, and may be specifically applied to an application scenario in which an electronic device performs satellite communication. Optionally, satellite communication may be applied to a scenario in which there is no terrestrial network coverage, or may be applied to a scenario in which there is terrestrial network coverage. This is not limited in this application. It should be noted that, in embodiments of this application, an example in which satellite communication is implemented based on a satellite is used for description. It should be understood that in a specific implementation, satellite communication may also be implemented based on satellite networking.

In embodiments of this application, the first electronic device may be, for example, a portable electronic device, such as a mobile phone, a tablet computer, a PC, or a smartwatch; and the second electronic device may be, for example, a vehicle-mounted communication device, or a vehicle-mounted satellite communication apparatus deployed on a vehicle-mounted communication device, for example, which may be a T-BOX.

For example, the first electronic device to which embodiments of this application may be applied may include but is not limited to an electronic device using HarmonyOS^{®}, iOS^{®}, Android^{®}, Microsoft^{®}, or another operating system.

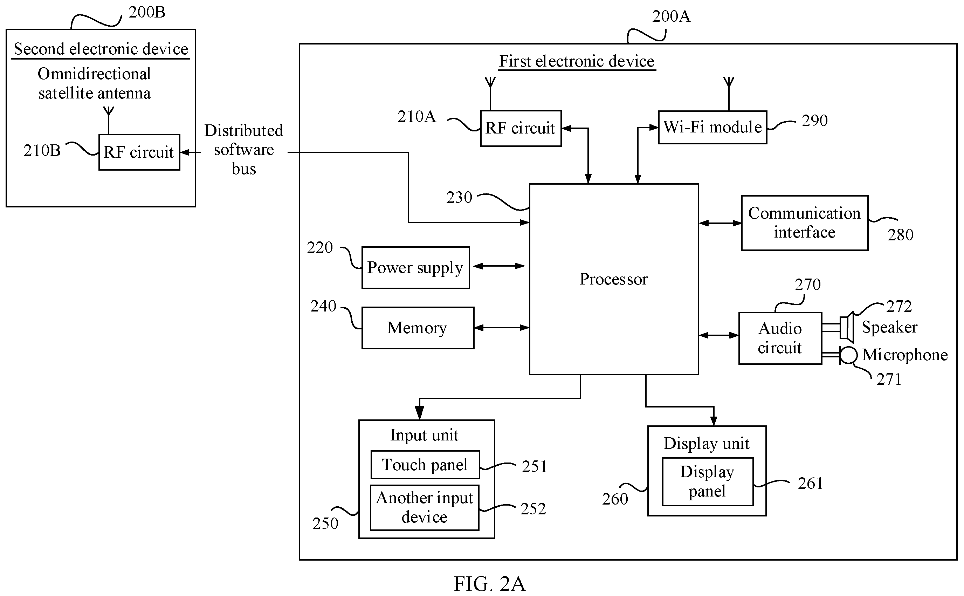

FIG. 2A is a diagram of possible partial hardware structures of a first electronic device 200A and a second electronic device 200B. The first electronic device 200A includes components such as a radio frequency (radio frequency, RF) circuit 210A, a power supply 220, a processor 230, a memory 240, an input unit 250, a display unit 260, an audio circuit 270, a communication interface 280, and a wireless fidelity (wireless fidelity, Wi-Fi) module 290. A person skilled in the art may understand that the hardware structure of the first electronic device 200A shown in FIG. 2A does not constitute a limitation on the first electronic device 200A. The first electronic device 200A provided in embodiments of this application may include more or fewer components than those shown in the figure, or combine two or more components, or have different component configurations. The components shown in FIG. 2A may be implemented by hardware including one or more signal processing and/or application-specific integrated circuits, software, or a combination of hardware and software.

In an optional embodiment, the first electronic device 200A may further invoke, through a distributed soft bus, an RF circuit 210B included in the second electronic device 200B, which may also be understood as that the RF circuit 210B included in the second electronic device 200B may be used as distributed virtualized hardware of the first electronic device 200A.

The RF circuit 210B may be configured to: receive and send a satellite communication packet in a satellite communication process. In an optional manner, after receiving a downlink satellite communication packet from a satellite and demodulating the downlink satellite communication packet, the RF circuit 210B may send the demodulated satellite communication packet to the processor 230 included in the first electronic device 200A for processing. In another optional manner, the processor 230 included in the first electronic device 200A may invoke, through a distributed soft bus between the first electronic device 200A and the second electronic device 200B, the RF circuit 210B in the second electronic device 200B to process a to-be-sent, encapsulated, and unmodulated satellite communication packet. Correspondingly, as a relay, the RF circuit 210B may modulate the to-be-sent, encapsulated, and unmodulated satellite communication packet, and then send the modulated satellite communication packet to a satellite via a satellite antenna. A frequency used by the RF circuit 210B to receive/send and modulate/demodulate the satellite communication packet may be obtained through negotiation between the second electronic device and the first electronic device. For example, the first electronic device sends frequency indication information to the second electronic device, where the frequency indication information indicates the second electronic device to adjust, by using a specified frequency or a specified frequency range, a receiving/sending frequency of the satellite antenna for the satellite communication packet, and modulate/demodulate the satellite communication packet by using the specified frequency or the specified frequency range. When determining that the specified frequency or the specified frequency range is supported, the second electronic device may reply with an acknowledgment message to the first electronic device. For another example, when registering a satellite communication capability with the first electronic device, the second electronic device may use a registration request message to carry a frequency or a frequency range supported by the second electronic device, to improve efficiency of negotiating a specified frequency or a specified frequency range between the first electronic device and the second electronic device.

Generally, the RF circuit 210B shown in FIG. 2A may include but is not limited to at least one processor, an omnidirectional satellite antenna or a directional satellite antenna, at least one amplifier, a transceiver, a coupler, a low noise amplifier (low noise amplifier, LNA), a duplexer, and the like.

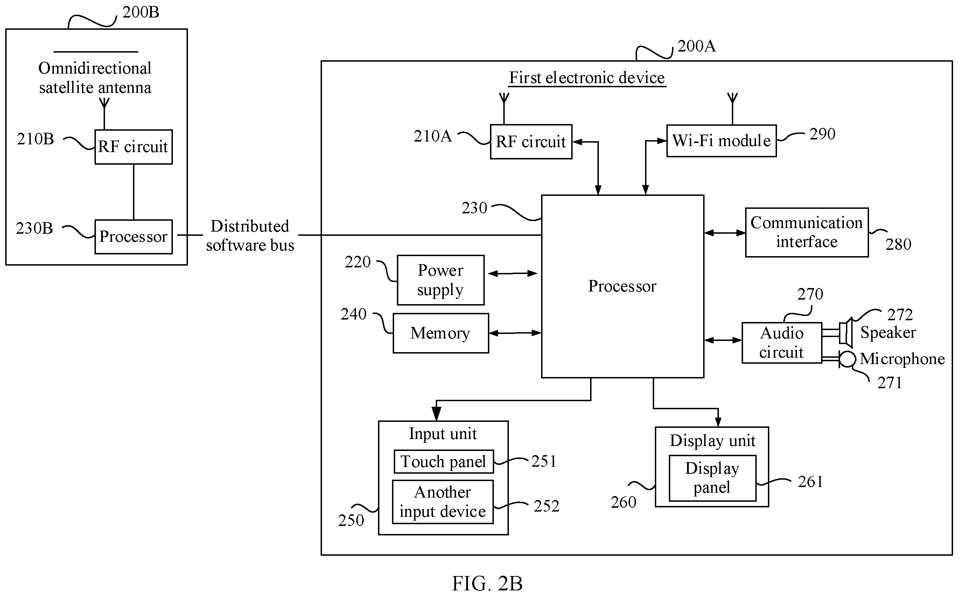

In another optional embodiment, FIG. 2B is another diagram of possible partial hardware structures of a first electronic device 200A and a second electronic device 200B. A difference from FIG. 2A lies in that the second electronic device 200B may also include a processor 230B. After receiving a downlink satellite communication packet from a satellite and demodulating the downlink satellite communication packet, the RF circuit 210B sends the demodulated satellite communication packet to the processor 230 included in the first electronic device 200A. In another optional manner, the processor 230 included in the first electronic device 200A may also send a to-be-sent, encapsulated, and unmodulated satellite communication packet to the processor 230B in the second electronic device 200B through a distributed soft bus between the first electronic device 200A and the second electronic device 200B, and the processor 230B indicates the RF circuit 210B to modulate the encapsulated and unmodulated satellite communication packet, and then send the modulated satellite communication packet to a satellite via a satellite antenna.

For example, the satellite communication packet may include communication data, and the communication data may include but is not limited to a call request, an SMS message, voice data after a call is established, and the like, and may further include a number of a called party/a recipient and the like.

The following describes the components of the first electronic device 200A in detail with reference to FIG. 2A.

The RF circuit 210A may be configured to: receive and send data in a communication or call process. Specifically, after receiving downlink data from a base station, the RF circuit 210A sends the downlink data to the processor 230 for processing. In addition, the RF circuit 210A sends to-be-sent uplink data to the base station. Generally, the RF circuit 210A includes but is not limited to an antenna, at least one amplifier, a transceiver, a coupler, a low noise amplifier (low noise amplifier, LNA), a duplexer, and the like.

In addition, the RF circuit 210A may communicate with another device through a wireless communication network. The wireless communication may be implemented by using any communication standard or protocol, including but not limited to global system for mobile communications (global system for mobile communications, GSM), general packet radio service (general packet radio service, GPRS), code division multiple access (code division multiple access, CDMA), wideband code division multiple access (wideband code division multiple access, WCDMA), long term evolution (long term evolution, LTE), email, and short message service (short message service, SMS).

The first electronic device 200A can further implement a communication service to interact with another electronic device. Therefore, the first electronic device 200A needs to have a data transmission function, that is, the first electronic device 200A needs to include a communication module. Although FIG. 2A shows communication modules such as the RF circuit 210A, the Wi-Fi module 290, and the communication interface 280, it may be understood that the first electronic device 200A includes at least one of the foregoing components or another communication module (for example, a Bluetooth module) configured to implement communication, for data transmission.

For example, when the first electronic device 200A is a mobile phone, the first electronic device 200A may include the RF circuit 210A, and may further include the Wi-Fi module 290, or may include a Bluetooth module (not shown in FIG. 2A). When the first electronic device 200A is a computer, the first electronic device 200A may include the communication interface 280, and may further include the Wi-Fi module 290, or may include a Bluetooth module (not shown in FIG. 2A). When the first electronic device 200A is a tablet computer, the first electronic device 200A may include the Wi-Fi module, or may include a Bluetooth module (not shown in FIG. 2A). In this embodiment of this application, the first electronic device 200A may further invoke the RF circuit 210B included in the second electronic device 200B. Alternatively, with reference to FIG. 2B, the first electronic device 200A may send an encapsulated and unmodulated satellite communication packet to the processor 230B in the second electronic device 200B.

A Wi-Fi technology is a short-range wireless transmission technology. The first electronic device 200A may be connected to an access point (access point, AP) through the Wi-Fi module 290, to access a data network. The Wi-Fi module 290 may be configured to: receive and send data in a communication process.

The first electronic device 200A may be physically connected to another device through the communication interface 280. Optionally, the communication interface 280 is connected to a communication interface of the another device through a cable, to implement data transmission between the first electronic device 200A and the another device.

The memory 240 may be configured to store a software program and a module. The processor 230 runs the software program and the module stored in the memory 240, to perform various function applications of the first electronic device 200A and data processing. Optionally, the memory 240 may mainly include a program storage area and a data storage area. The program storage area may store an operating system (mainly including software programs or modules respectively corresponding to a kernel layer, a system layer, an application framework layer, an application layer, and the like).

In addition, the memory 240 may include a high-speed random access memory, and may further include a non-volatile memory, for example, at least one magnetic disk storage device, a flash storage device, or another volatile solid-state storage device.

The input unit 250 may be configured to: receive edit operations of a plurality of different types of data objects such as digit or character information input by a user, and generate a key signal input related to a user setting and function control of the first electronic device 200A. Optionally, the input unit 250 may include a touch panel 251 and another input device 252.

The touch panel 251, also referred to as a touchscreen, may collect a touch operation performed by the user on or near the touch panel (for example, an operation performed by the user on the touch panel 251 or near the touch panel 251 via any proper object or accessory such as a finger or a stylus), and drive a corresponding connection apparatus based on a preset program. In this embodiment of this application, the touch panel 251 may collect an operation performed by the user on a display panel 261, for example, an operation such as initiating a satellite call, receiving a satellite call, sending a satellite SMS message, or receiving a satellite SMS message in an interface.

Optionally, the another input device 252 may include but is not limited to one or more of a physical keyboard, a function button (for example, a volume control button or a power button), a trackball, a mouse, a joystick, and the like.

The display unit 260 may be configured to display information content input by the user, information content provided for the user, and various menus of the first electronic device 200A. The display unit 260 is a display system of the first electronic device 200A, and is configured to present an interface to implement human-computer interaction. The display unit 260 may include a display panel 261. Optionally, the display panel 261 may be configured in a form such as a liquid crystal display (liquid crystal display, LCD) or an organic light-emitting diode (organic light-emitting diode, OLED). In this embodiment of this application, when the first electronic device 200A is a receiver device of a satellite SMS message or a satellite call, the display unit 260 may be configured to display an interface for the user, so that the user can view the received satellite SMS message or satellite call in the interface, and can further reply to the satellite SMS message or satellite call in the interface. Alternatively, when the first electronic device 200A is a transmitter device of a satellite SMS message or a satellite call, the display unit 260 may be configured to display an interface for the user, so that the user can send the satellite SMS message or the satellite call in the interface, and can further receive a reply message of the receiver device in the interface. In addition, the first electronic device 200A may further display a satellite communication icon, a quantity of locked satellites, signal strength, and the like for the user. For example, a dialing APP includes a common dialing control, and further includes a dialing control for a satellite call.

The processor 230 is a control center of the first electronic device 200A, connects to the components through various interfaces and lines, and runs or executes the software program and/or the module stored in the memory 240 and invokes the data stored in the memory 240, to perform various functions of the electronic device 200A and process the data, so as to implement a plurality of services of the first electronic device 200A. In this embodiment of this application, the processor 230 may be configured to implement the satellite communication method provided in embodiments of this application.

The first electronic device 200A further includes the power supply 220 (such as a battery) configured to supply power to the components. Optionally, the power supply 220 may be logically connected to the processor 230 through a power management system, to implement functions such as charge management, discharge management, and power consumption management through the power management system.

As shown in FIG. 2A, the first electronic device 200A further includes the audio circuit 270, a microphone 271, and a speaker 272, and may provide an audio interface between the user and the first electronic device 200A. The audio circuit 270 may be configured to: convert audio data into a signal that can be identified by the speaker 272, and transmit the signal to the speaker 272. The speaker 272 converts the signal into a sound signal for output. The microphone 271 is configured to: collect an external sound signal (for example, a sound of person speaking, or another sound), convert the collected external sound signal into a signal that can be identified by the audio circuit 270, and send the signal to the audio circuit 270. The audio circuit 270 may be further configured to: convert the signal sent by the microphone 271 into audio data, and then output the audio data to the RF circuit 210A for sending to, for example, another electronic device, or output the audio data to the memory 240 for subsequent processing.

Although not shown, the first electronic device 200A may further include a camera, at least one sensor, and the like. Details are not described herein again. The at least one sensor may include but is not limited to a pressure sensor, a barometric pressure sensor, an acceleration sensor, a distance sensor, a fingerprint sensor, a touch sensor, a temperature sensor, and the like.

An operating system (operating system, OS) in this embodiment of this application is the most basic system software running on the first electronic device 200A. A software system of the first electronic device 200A may use a layered architecture, an event-driven architecture, a microkernel architecture, a microservice architecture, or a cloud architecture. In embodiments of this application, an operating system using a layered architecture is used as an example to describe a software system architecture of the first electronic device 200A.

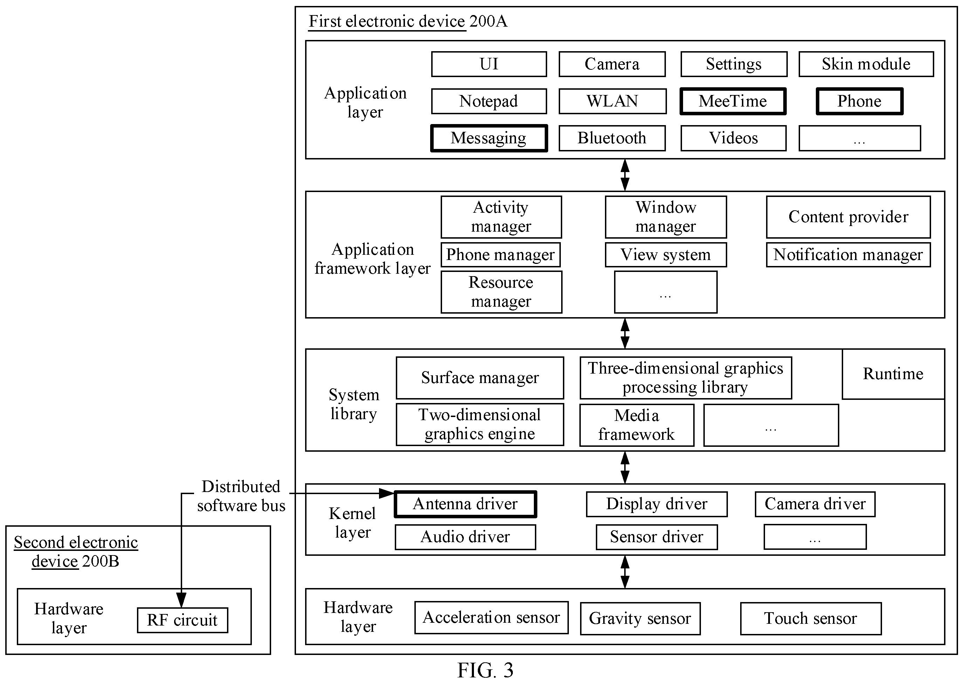

FIG. 3 is a block diagram of a software system architecture of an electronic device according to an embodiment of this application. As shown in FIG. 3, the software system architecture of the electronic device may be a layered architecture. For example, software may be divided into several layers, and each layer has a clear role and task. The layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 3, the application layer may include Camera, Settings, a skin module, a user interface (user interface, UI), a third-party application, and the like. The third-party application may include a wireless local area network (wireless local area network, WLAN), MeeTime, Phone, Bluetooth, Videos, Notepad, Messaging, and the like. In this embodiment of this application, attention may be paid to an instant messaging APP (for example, a MeeTime APP), a phone APP, or a messaging APP that may be provided by the application layer, and satellite communication may be performed in the instant messaging APP, the phone APP, or the messaging APP. It should be noted that the method provided in this embodiment of this application may be further applied to various future APPs that can perform communication through a satellite. An applicable APP is not limited in this application. It may be understood that the method provided in this embodiment of this application may be a function provided by the operating system.

In a possible implementation, the application may be developed by using a Java language, and is completed by invoking an application programming interface (application programming interface, API) provided by the application framework layer. A developer may interact with a bottom layer (for example, the hardware layer or the kernel layer) of the operating system through the application framework layer, to develop an application of the developer. The application framework layer mainly includes a series of services and management systems of the operating system.

The application framework layer provides an application programming interface and a programming framework for applications at the application layer. The application framework layer includes some predefined functions. As shown in FIG. 3, the application framework layer may include an activity manager, a window manager, a content provider, a view system, a phone manager, a resource manager, a notification manager, and the like.

The activity manager is configured to: manage a lifecycle of each application, provide a frequently-used navigation rollback function, and provide an interactive interface for windows of all programs.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, an audio, calls that are made and answered, a browsing history and bookmarks, an address book, and the like.

The view system includes visual controls such as a control for displaying a text and a control for displaying an image. The view system may be configured to construct an application. A display interface may include one or more views. For example, a display interface including an SMS message notification icon may include a text display view and an image display view.

The phone manager is configured to provide a communication function of the electronic device, for example, management of a call status (including answering, declining, or the like).

The resource manager provides various resources such as a localized character string, an icon, an image, a layout file, and a video file for an application.

The notification manager enables an application to display notification information in a status bar, and may be configured to convey a notification message. The notification manager may automatically disappear after a short pause without requiring user interaction. For example, the notification manager is configured to: notify download completion, provide a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an alert tone is made, the electronic device vibrates, or an indicator blinks.

A runtime includes a core library and a virtual machine. The runtime is responsible for scheduling and management of the operating system.

The core library includes two parts: a function that needs to be invoked in Java language, and a core library of the operating system. The application layer and the application framework layer run on the virtual machine. The virtual machine executes Java files of the application layer and the application framework layer as binary files. The virtual machine is configured to perform functions such as object lifecycle management, stack management, thread management, security and exception management, and garbage collection.

The system library may include a plurality of functional modules, for example, a surface manager (surface manager), a media framework (media framework), a three-dimensional graphics processing library (for example, OpenGL ES), and a two-dimensional graphics engine (for example, SGL).

The surface manager is configured to: manage a display subsystem and provide fusion of two-dimensional and 3D layers for a plurality of applications.

The media framework supports playback and recording in a plurality of frequently-used audio and video formats, and static image files. The media framework can support a plurality of audio and video coding formats, such as MPEG-4, H.264, MP3, AAC, AMR, JPG, and PNG.

The three-dimensional graphics processing library is configured to implement three-dimensional graphics drawing, image rendering, composition, layer processing, and the like.

The two-dimensional graphics engine is a drawing engine for two-dimensional drawing.

In some embodiments, the three-dimensional graphics processing library may be configured to draw a three-dimensional motion trajectory image, and the two-dimensional graphics engine may be configured to draw a two-dimensional motion trajectory image.

In this embodiment of this application, the system layer may be configured to: shield a difference between a protocol and communication, and provide unified system device discovery, connection, authentication, networking, transmission, cross-device instruction scheduling, data synchronization, and the like. For example, the system layer may further include a soft bus, and the soft bus is responsible for discovery, connection, authentication, networking, data transmission, and the like, to support device discovery and data channel capabilities of the electronic device.

The kernel layer is a layer between hardware and software. The kernel layer includes at least an antenna driver, a display driver, a camera driver, an audio driver, and a sensor driver. In this embodiment of this application, the antenna driver may be further connected to an RF circuit included in a hardware layer of the second electronic device 200B through a distributed soft bus, to drive the RF circuit to modulate and demodulate a satellite communication packet through a modem, receive and send a satellite communication packet through a satellite antenna, and the like, so that the first electronic device 200A can invoke a satellite communication capability of the second electronic device 200B.

The hardware layer may include various sensors such as an acceleration sensor, a gravity sensor, and a touch sensor. It may be understood that the RF circuit included in the second electronic device 200B may be used as distributed virtualized hardware of the first electronic device 200A.

Generally, the first electronic device 200A may run a plurality of applications at the same time. In a simple manner, one application may correspond to one process, and in a complex manner, one application may correspond to a plurality of processes. Each process has a process number (process ID).

It should be understood that "at least one of the following (items)" or a similar expression thereof in embodiments of this application means any combination of these items, including a single item (piece) or any combination of a plurality of items (pieces). For example, at least one of a, b, or c may represent: a, b, c, a and b, a and c, b and c, or a, b, and c, where a, b, and c may be singular or plural. "A plurality of" refers to two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects.

In addition, it should be understood that in description of this application, terms such as "first" and "second" are merely used for distinguishing and description, but should not be understood as indicating or implying relative importance, or should not be understood as indicating or implying a sequence.

It should be understood that a hardware structure of the electronic device may be shown in FIG. 2A or FIG. 2B, and a software system architecture may be shown in FIG. 3. A software program and/or a module corresponding to the software system architecture of the electronic device may be stored in the memory 240, and the processor 230 may run the software program and an application stored in the memory 240, to perform a procedure of the satellite communication method provided in embodiments of this application.

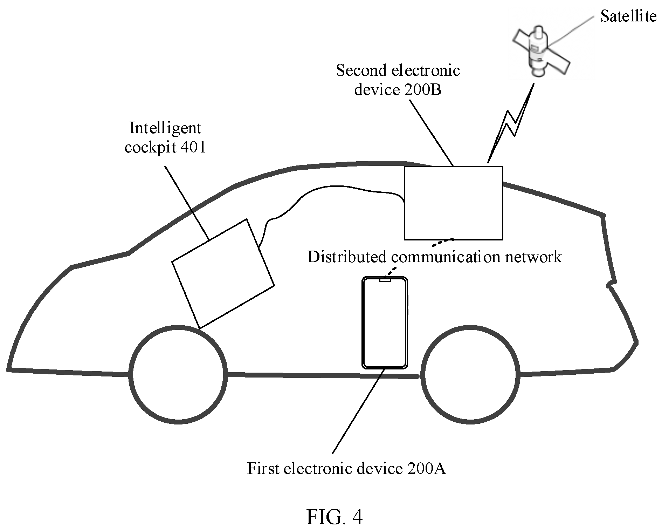

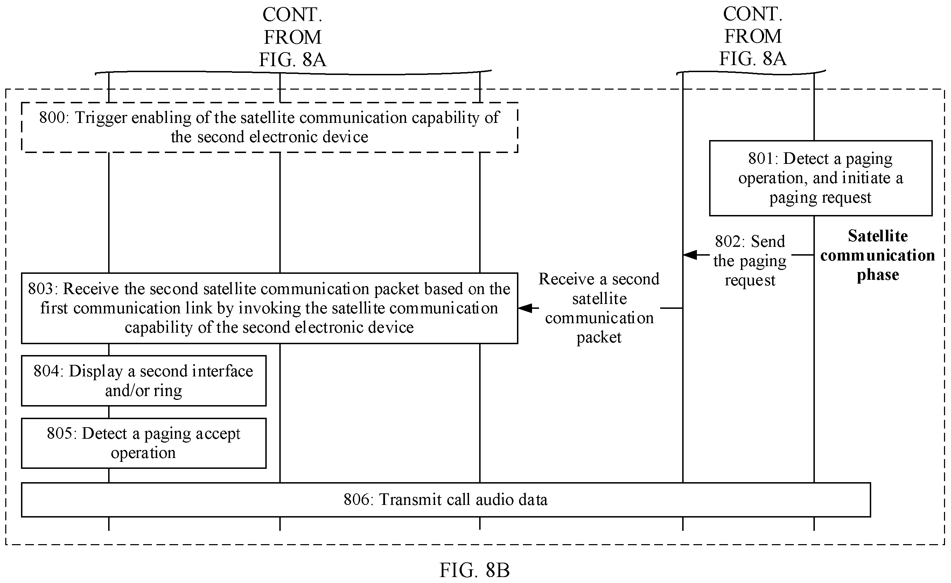

To facilitate understanding of the satellite communication method provided in this application, the following describes, with reference to content shown in FIG. 4 to FIG. 8A and FIG. 8B, an implementation process of the method provided in this application.

The method provided in this embodiment of this application may be applied to a satellite communication scenario, and may be specifically applied to a scenario in which satellite communication of the first electronic device is implemented through the second electronic device. It may also be understood that the first electronic device can have the same satellite communication capability as the second electronic device by invoking the satellite communication capability of the second electronic device.

For example, the method may be applicable to a scenario in which the satellite communication capability of the first electronic device is abnormal, for example, an antenna of the first electronic device is abnormal. In this scenario, according to the method provided in this embodiment of this application, the first electronic device invokes the satellite communication capability of the second electronic device, to ensure normal use of the satellite communication function of the first electronic device.

For another example, the method may be further applied to a scenario in which a satellite communication capability of the first electronic device is weaker than a satellite communication capability of the second electronic device. For example, any one of the following possible scenarios may be included.

Scenario 1: A frequency range supported by a signal modulation capability of the second electronic device is greater than a frequency range supported by a signal modulation capability of the first electronic device. In this scenario, according to the method provided in embodiments of this application, the first electronic device may select more possible frequencies when performing satellite communication by invoking the satellite communication capability of the second electronic device, thereby ensuring satellite communication quality.

Scenario 2: A satellite signal receiving/sending range supported by a satellite antenna capability of the second electronic device is greater than a satellite signal receiving/sending range supported by a satellite antenna capability of the first electronic device. For example, the second electronic device has an omnidirectional satellite communication capability, and the first electronic device has a directional satellite communication capability. According to the method provided in this application, the first electronic device may have the omnidirectional satellite communication capability of the second electronic device. Alternatively, for example, the first electronic device is integrated with a first directional satellite antenna, the second electronic device has a second directional satellite antenna, and a satellite signal receiving/sending range of the first directional satellite antenna is less than a satellite signal receiving/sending range of the second directional satellite antenna. According to this method, the first electronic device may implement satellite communication within the satellite signal receiving/sending range of the second directional satellite antenna.

In this scenario, according to the method provided in embodiments of this application, the first electronic device may have a larger signal receiving/sending range when performing satellite communication by invoking the satellite communication capability of the second electronic device, thereby reducing complexity of satellite alignment.

For example, the first electronic device may have a directional satellite communication capability, and the second electronic device may have an omnidirectional satellite communication capability. According to the method provided in embodiments of this application, the first electronic device may also have the omnidirectional satellite communication capability.

Scenario 3: A frequency range supported by a signal modulation capability of the second electronic device is greater than a frequency range supported by a signal modulation capability of the first electronic device, and a satellite signal receiving/sending range supported by a satellite antenna capability of the second electronic device is greater than a satellite signal receiving/sending range supported by a satellite antenna capability of the first electronic device.

In this scenario, according to the method provided in embodiments of this application, when performing satellite communication by invoking the satellite communication capability of the second electronic device, the first electronic device may not only select more possible frequencies, but also have a larger signal receiving/sending range.

Refer to FIG. 2A. Based on a distributed communication network established between the first electronic device and the second electronic device, the satellite communication capability of the second electronic device can be registered with the first electronic device, so that the first electronic device can invoke the satellite communication capability of the second electronic device, and the first electronic device can also have the satellite communication capability of the second electronic device. It should be understood that the satellite communication capability of the second electronic device may be understood as a satellite antenna capability, a signal modulation capability, and/or a signal demodulation capability of the second electronic device. For example, as shown in FIG. 2A, the satellite communication capability of the second electronic device may be implemented via the RF circuit 210B.

Based on registration of the satellite communication capability of the second electronic device, the first electronic device may establish a satellite link between the first electronic device and the satellite by invoking the satellite communication capability provided by the second electronic device. It may be understood that the first electronic device may invoke the RF circuit 210B included in the second electronic device as virtualized hardware of the first electronic device.

In a possible scenario, FIG. 4 is a diagram of a scenario to which a satellite communication method is applicable according to an embodiment of this application. As shown in FIG. 4, a vehicle may include an intelligent cockpit 401 and a second electronic device 200B. The first electronic device 200A may establish a distributed communication network with the second electronic device 200B.

The intelligent cockpit 401 is configured to provide an integrated digital platform for the vehicle, and may provide various intelligent functions, to provide intelligent experience for a driver and promote driving safety. For example, the intelligent cockpit 401 may include a communication system, a control system, an entertainment system, and the like. Optionally, the intelligent cockpit 401 may establish a communication link with the second electronic device 200B, so that a user can perform satellite communication via a vehicle-mounted central display or the like included in the vehicle. However, this manner has problems of poor privacy of satellite communication and inconvenience for rear passengers to perform satellite communication. In addition, the user also needs to implement satellite communication by operating the vehicle-mounted central display in the vehicle, and there are some operation restrictions. The communication link established between the intelligent cockpit 401 and the second electronic device 200B may be implemented in a form of Bluetooth, Wi-Fi, NearLink, or the like. This is not limited in this application.

The second electronic device 200B is configured to provide a vehicle-mounted satellite communication function for the vehicle, and may implement deployment of an omnidirectional satellite antenna or a directional satellite antenna. The second electronic device 200B may be connected to a satellite via the omnidirectional satellite antenna or the directional satellite antenna, to perform satellite communication. For example, the second electronic device 200B may be a T-BOX.

The first electronic device 200A may establish a distributed communication network with the second electronic device 200B. Based on the distributed communication network, the first electronic device 200A may register a satellite communication capability of the second electronic device 200B as an invocable capability of the first electronic device 200A, which may also be understood as that, although an RF circuit in the second electronic device 200B is not integrated into the first electronic device 200A, the RF circuit may be used as distributed virtualized hardware of the first electronic device 200A based on the distributed communication network, so that the first electronic device 200A can invoke the RF circuit.

For example, the first electronic device 200A is a mobile phone. When the mobile phone has the satellite communication capability of the second electronic device 200B, this may be displayed to the user through a user interface.

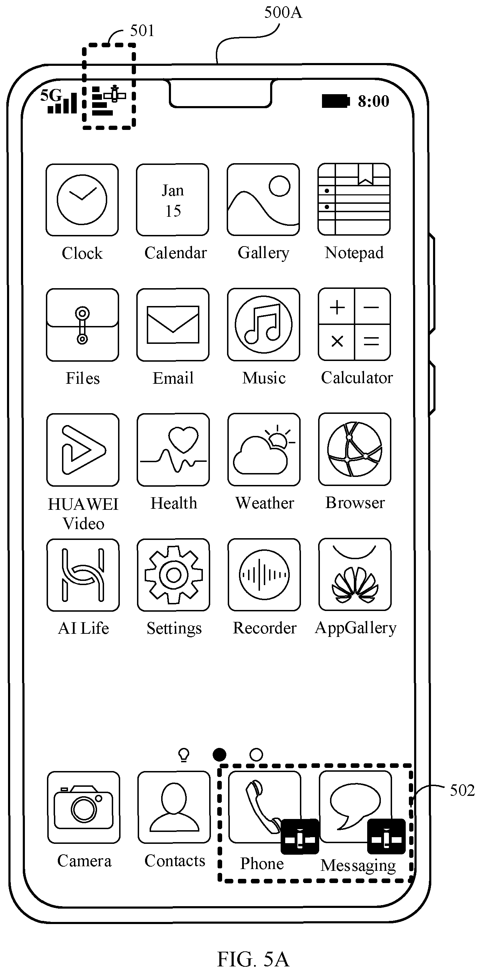

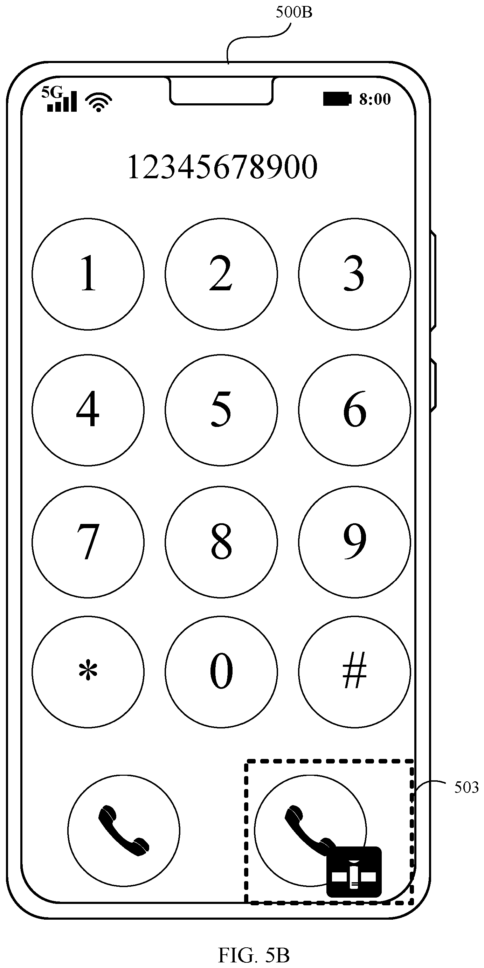

For example, FIG. 5A and FIG. 5B are diagrams of interfaces of a satellite communication method according to an embodiment of this application. An interface 500A shown in FIG. 5A may be a home screen display interface of the mobile phone. The interface 500A may include prompt information 501 indicating signal strength of satellite communication, and may further display a satellite communication indicator 502 on an APP that can use satellite communication, for example, further include the satellite communication indicator 502 on an icon of a phone APP and an icon of a messaging APP, or may include a pop-up message/a notification bar message indicating that a satellite link is successfully established, an indication message indicating a quantity of locked satellites, and the like. The prompt information related to satellite communication and displayed on the mobile phone is not limited in this application.

An interface 500B shown in FIG. 5B may be a home page display interface of the phone APP. The interface 500B may include a dialing button for making a call through a cellular network, and may further include a dialing button 503 for making a call via a satellite. The dialing button 503 may include a satellite communication indicator.

It may be understood that, an example in which the interface 500B is a dialing interface is used for description. An interface for receiving/sending an SMS message may also include a button for sending an SMS message through a cellular network, and may further include a button for sending an SMS message through a satellite network. The button for sending an SMS message through a satellite network may include a satellite communication indicator.

In this way, both an indicator of performing communication through a cellular network (for example, which may include making a call through a cellular network and receiving/sending an SMS message through a cellular network) and an indicator of performing communication through a satellite network are displayed in the interface of the first electronic device, so that the user can select different communication manners.

In the scenario shown in FIG. 4, for example, the second electronic device 200B has an omnidirectional satellite communication capability. Different from the mobile phone having a directional satellite communication capability, in the method provided in this embodiment of this application, the mobile phone can also have the omnidirectional satellite communication capability by invoking the omnidirectional satellite communication capability of the second electronic device 200B. In this way, when performing satellite communication on the mobile phone, the user does not need to perform a manual operation such as satellite alignment, thereby reducing operation complexity of the user.

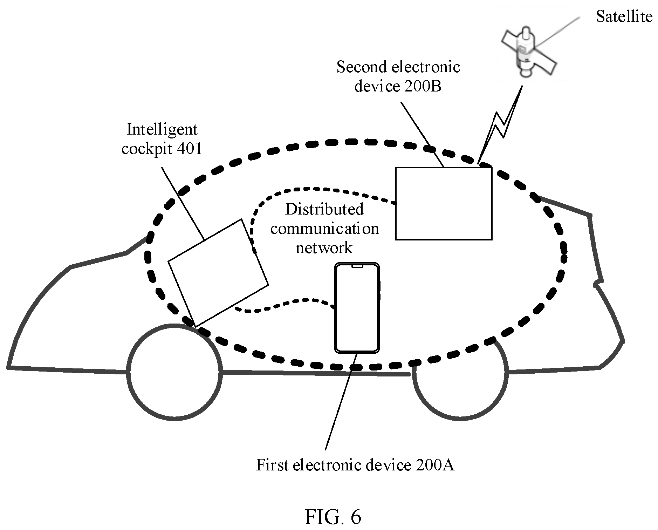

In another possible scenario, FIG. 6 is a diagram of another scenario to which a satellite communication method is applicable according to an embodiment of this application. Same as FIG. 4, a vehicle may include an intelligent cockpit 401 and a second electronic device 200B. A difference from FIG. 4 lies in that the first electronic device 200A may establish a distributed communication network with the second electronic device 200B by using the intelligent cockpit 401 as a communication relay.

The intelligent cockpit 401 may be configured to provide an access point for the first electronic device 200A and the second electronic device 200B. In this way, the first electronic device 200A and the second electronic device 200B may be separately connected to the intelligent cockpit 401, so that a communication link between the first electronic device 200A and the second electronic device 200B can also be established.

The intelligent cockpit 401 may be further configured to provide a display interface, so that when the first electronic device 200A is connected to the intelligent cockpit 401 for the first time, the first electronic device 200A can implement authentication through the interface, and then establish a communication link.

In an optional manner, when the first electronic device 200A and the intelligent cockpit 401 log in to a same user account, a communication link may be automatically established, to form a distributed terminal. Alternatively, the first electronic device 200A is connected to the intelligent cockpit 401 for the first time in response to an operation of confirming connection establishment by the user, and a subsequent connection may be automatically implemented.

In another optional manner, when the first electronic device 200A and the intelligent cockpit 401 log in to different user accounts, the first electronic device 200A is connected to the intelligent cockpit 401 for the first time, and the intelligent cockpit 401 may display, to the first electronic device 200A through an interface, a verification code, a personal identification number (personal identification number, PIN), or the like for authentication. The first electronic device 200A may complete connection authentication with the intelligent cockpit 401 by scanning a QR code, entering a PIN, or the like, and then establish a communication link.

The distributed communication network between the intelligent cockpit 401 and the first electronic device 200A may be implemented in but not limited to the following manners: NearLink, Bluetooth, Wi-Fi direct (direct) (which may also be referred to as "Wi-Fi P2P"), and the like. The distributed communication network can implement high-speed and low-latency communication between devices.

Based on the application scenario described in FIG. 6, the following describes several satellite communication scenarios based on the application scenario. It should be understood that the following satellite communication scenarios are not limited in embodiments of this application.

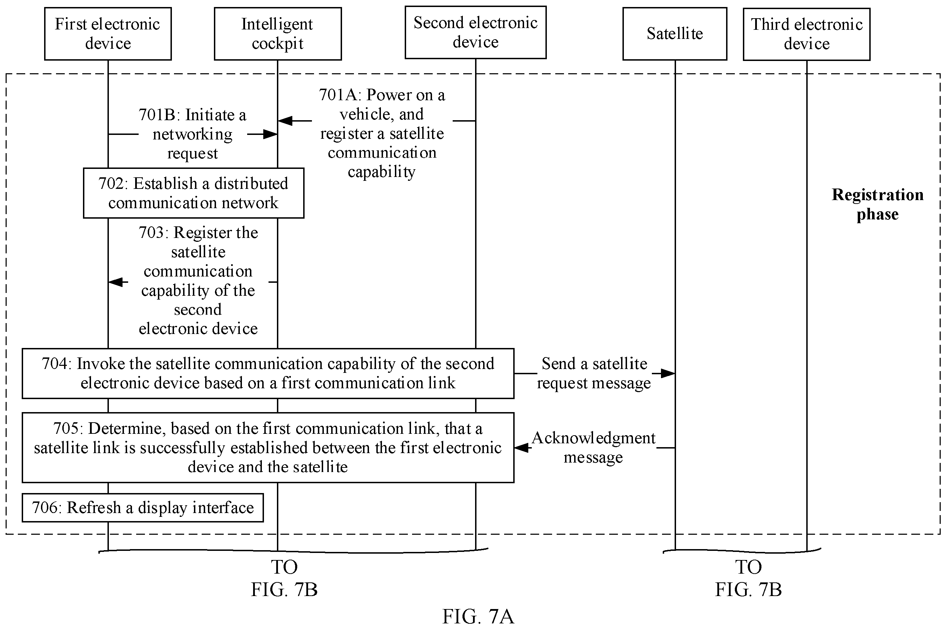

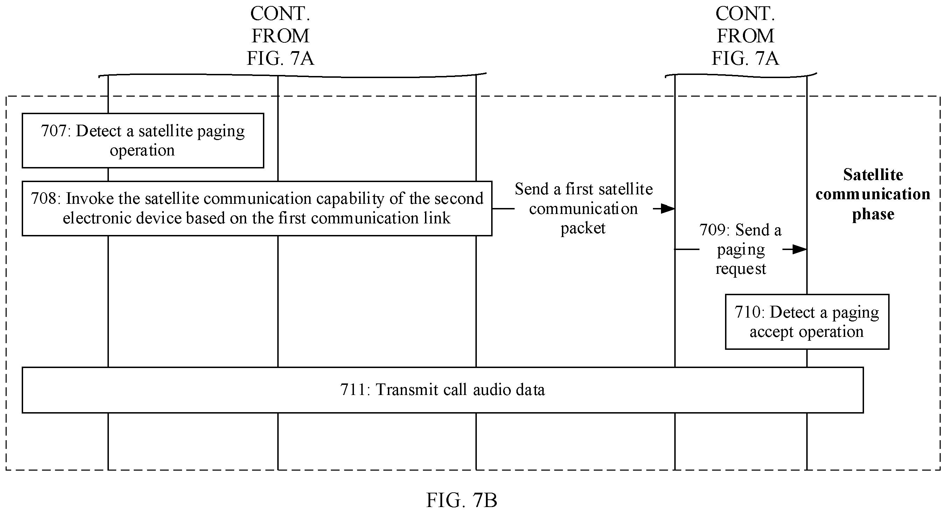

Scenario A: Paging scenario. For example, FIG. 7A and FIG. 7B are a diagram of a procedure of a satellite communication method according to an embodiment of this application. The procedure may mainly include two phases: a registration phase and a satellite communication phase. The registration phase may be used to establish a distributed communication network between a plurality of devices, which may also be understood as establishing a communication link between the plurality of devices; and implement registration of the satellite communication capability of the second electronic device with the first electronic device, so that the first electronic device can invoke the satellite communication capability of the second electronic device through the communication link. The satellite communication phase may be used to implement satellite communication between the first electronic device and the satellite based on an implementation process of the registration phase. The procedure may include the following steps.

### (1) Registration phase

Step 701A: The vehicle is powered on, and the second electronic device registers a satellite communication capability with the intelligent cockpit.

For example, after the vehicle is powered on, the intelligent cockpit may send a first registration request message to the second electronic device, where the first registration request message indicates the second electronic device to register the satellite communication capability. Correspondingly, the second electronic device receives the first registration request message from the intelligent cockpit.

The second electronic device may send a feedback message to the intelligent cockpit in response to the first registration request message, where the feedback message may include first indication information, and the first indication information is used to register the satellite communication capability included in the second electronic device, for example, a satellite antenna capability, a signal modulation capability, and/or a signal demodulation capability. Correspondingly, the intelligent cockpit receives the feedback message from the second electronic device, and may determine, based on the feedback message, the satellite communication capability included in the second electronic device. It should be noted that, in this embodiment of this application, the second electronic device is not limited to including only the satellite communication capability, and may further include another communication capability, for example, a near field communication capability or a cellular network communication capability.

For another example, after the vehicle is powered on, the second electronic device may also actively send a second registration request message through a communication link with the intelligent cockpit, where the second registration request message may include first indication information, and the first indication information is used to register the satellite communication capability included in the second electronic device, for example, a satellite antenna capability, a signal modulation capability, and/or a signal demodulation capability. For example, the communication link between the second electronic device and the intelligent cockpit may be implemented in but not limited to the following manners: wired, NearLink, Bluetooth, and Wi-Fi P2P.

Step 701B: The first electronic device initiates a networking request to the intelligent cockpit.

For example, when the first electronic device enters a device scanning range of the intelligent cockpit, device discovery of the intelligent cockpit can be implemented. Alternatively, when the intelligent cockpit enters a device scanning range of the first electronic device, device discovery of the first electronic device can be implemented.

For example, the first electronic device performs device scanning and device discovery. When the first electronic device finds the intelligent cockpit through scanning, the first electronic device may send a networking request to the intelligent cockpit, where the networking request is used to establish a communication link between the first electronic device and the intelligent cockpit.

It should be noted that an execution sequence of step 701A and step 701B is not limited in this embodiment of this application. For example, step 701A and step 701B may be performed synchronously.

Step 702: The first electronic device establishes a distributed communication network with the intelligent cockpit, which may also be understood as establishing a communication link. For example, the communication link between the first electronic device and the intelligent cockpit may be implemented in but not limited to the following manners: wired, NearLink, Bluetooth, and Wi-Fi P2P.

For example, the networking request sent by the first electronic device may include information about a first user account logged in to an operating system of the first electronic device.

In a possible scenario, when detecting that the information about the first user account is the same as information about a second user account logged in to an operating system of the intelligent cockpit, the intelligent cockpit may automatically successfully establish a distributed communication network by using the networking request of the first electronic device.

In another possible scenario, when detecting that the information about the first user account is different from information about a second user account, the intelligent cockpit may display an authentication interface. In an optional manner, the authentication interface may be used to display a QR code for authentication. In another optional manner, the authentication interface may be used to display a PIN for authentication. In this way, the first electronic device can also successfully establish a distributed communication network with the intelligent cockpit by scanning the QR code for authentication or entering the PIN for authentication.

Step 703: The intelligent cockpit registers the satellite communication capability of the second electronic device with the first electronic device through the distributed communication network.

For example, based on the distributed communication network established in step 701B and step 702, the intelligent cockpit may send an indication message (or referred to as a "third registration request message") to the first electronic device, where the third registration request message indicates the satellite communication capability of the second electronic device, to instruct the first electronic device to use the satellite communication capability of the second electronic device as a distributed satellite communication capability. Correspondingly, the first electronic device receives the third registration request message from the intelligent cockpit, and registers, with the operating system of the first electronic device based on the third registration request message, the communication capability of the second electronic device as the distributed satellite communication capability, where the communication capability may be used as a distributed virtualized hardware structure of the first electronic device, so that hardware functions of the first electronic device can be expanded.

In addition, based on the communication link (for example, which may be referred to as a "second communication link") between the first electronic device and the intelligent cockpit and a communication link (for example, which may be referred to as a "third communication link") between the intelligent cockpit and the second electronic device, a communication link (for example, which may be referred to as a "first communication link") between the first electronic device and the second electronic device may also be indirectly formed. It should be understood that, in the scenario shown in FIG. 4, the first electronic device may directly establish the communication link, that is, the first communication link, with the second electronic device.

Step 704: The first electronic device invokes the satellite communication capability of the second electronic device based on the first communication link, to send a satellite request message to the satellite, where the satellite request message is used to request to establish a satellite link with the satellite, which may also be understood as a satellite searching operation, and the first communication link is a communication link between the first electronic device and the second electronic device.

For example, when the satellite communication capability of the second electronic device includes an omnidirectional satellite antenna capability, the first electronic device does not need to invoke the second electronic device to perform a satellite alignment operation. In this way, compared with using a directional satellite communication capability of the first electronic device, invoking the satellite communication capability of the second electronic device by the first electronic device can improve a satellite communication capability of the first electronic device, and eliminate the need for satellite alignment or reduce satellite alignment difficulty.

In addition, the first electronic device may further indicate a frequency range used by the second electronic device to send the satellite request message. It may be understood that, in a satellite searching process, the first electronic device may indicate the second electronic device to broadcast the satellite request message at a plurality of frequencies, so that more satellites can be found.

Step 705: When receiving an acknowledgment message from the satellite based on the first communication link by invoking the satellite communication capability of the second electronic device, the first electronic device determines that the satellite link is successfully established between the first electronic device and the satellite, which may also be understood as a satellite locking operation.

It should be noted that the first electronic device may receive an acknowledgment message from one or more satellites, so that one or more satellite links can be established. When establishing a plurality of satellite links with a plurality of satellites, the first electronic device may select a satellite link with a best signal as a target satellite link, to implement transmission of a satellite communication packet. A satellite link in the following satellite communication phase may be understood as the target satellite link in the plurality of satellite links. In addition, it may be further understood that when a signal status in the plurality of satellite links changes, a switch to a different target satellite link can be further performed.

Step 706: The first electronic device refreshes a display interface based on the acknowledgment message of the satellite.

For example, the first electronic device may detect a satellite communication status based on the acknowledgment message of the satellite, where the satellite communication status may include but is not limited to a satellite link establishment status (which may also be understood as "whether a satellite is successfully locked"), a quantity of locked satellites, and satellite signal strength.

The first electronic device refreshes, in response to the satellite communication status, a related interface that includes satellite communication content on the first electronic device, where the satellite communication content may include, for example, but is not limited to a control indicating to perform satellite communication and prompt information. For example, the prompt information may include one or a combination of the following information: second indication information indicating that the satellite link is successfully established, information about a quantity of locked satellites, and satellite signal strength information. The related interface may include, for example, but is not limited to the dialing interface shown in the interface 500B in FIG. 5B, the home screen interface shown in the interface 500A in FIG. 5A, a status bar interface, a notification bar interface, a messaging interface, or the like. Therefore, the interface is refreshed, so that the user can learn of information such as current satellite signal strength, a quantity of locked satellites, and a current satellite connection status.

It should be noted that, in this embodiment of this application, the related interface that may be refreshed by the first electronic device based on the acknowledgment message of the satellite is not limited. For example, the related interface may include a current display interface of the first electronic device, or may include another interface that is not displayed. It should be understood that the refreshed related interface may be any interface, preconfigured on the first electronic device, that can display a related control or prompt information of satellite communication.

In addition, after the first electronic device successfully establishes the satellite link with the satellite, based on the content described in the foregoing embodiment, the first electronic device may implement communication with the satellite by invoking the satellite communication capability of the second electronic device. Therefore, the first electronic device can negotiate a receiving/sending frequency of a modulated satellite communication packet with the second electronic device. It may be understood that the first electronic device may negotiate the receiving/sending frequency with the second electronic device based on a frequency range supported by the connected satellite.

For example, the first electronic device sends frequency indication information to the second electronic device, where the frequency indication information indicates a receiving/sending frequency of the second electronic device for the satellite communication packet, and the receiving/sending frequency is selected from the frequency range supported by the connected satellite. Correspondingly, the second electronic device receives the frequency indication information. When receiving invocation of the first electronic device to send a satellite communication packet to the satellite, the second electronic device modulates the satellite communication packet at the receiving/sending frequency indicated by the frequency indication information, and sends the satellite communication packet via a satellite antenna at the receiving/sending frequency. When receiving the satellite communication packet from the satellite, the second electronic device receives the satellite communication packet via the satellite antenna at the receiving/sending frequency, and demodulates the satellite communication packet at the receiving/sending frequency, and then sends the demodulated satellite communication packet to the first electronic device. In addition, after receiving the frequency indication information from the first electronic device, the second electronic device determines that the second electronic device can support the receiving/sending frequency indicated by the frequency indication information, and may send an acknowledgment message to the first electronic device, to determine that negotiation between the first electronic device and the second electronic device succeeds.

### (2) Satellite communication phase

Step 707: The first electronic device detects a satellite paging operation.

In a possible scenario, on the dialing interface shown in FIG. 5B, when detecting an operation of entering a paging number by the user and a tap operation performed by the user on the control 503, the first electronic device may invoke, through the distributed soft bus, the RF circuit 210B in the second electronic device 200B shown in FIG. 2A.

The paging number may be a satellite call number, or the paging number may be a cellular number. For example, in a satellite communication network, an association relationship between a cellular number and a satellite call number may be pre-stored. When the satellite communication network is detected, the cellular number may be automatically converted into the satellite call number.

It should be understood that, in some scenarios, in both communication parties, a calling party may use a satellite communication network and a called party may use a terrestrial communication network, and a paging number may be converted in a network of a corresponding type.

In an optional embodiment, the first electronic device obtains communication data in response to the satellite paging operation; and then the first electronic device encapsulates the communication data to obtain a satellite communication packet, where the satellite communication packet is an encapsulated and unmodulated packet. For example, when the satellite paging operation is used to initiate a call, the communication data may be a call request. In addition, it may be understood that, when a call between two devices is successfully established, the communication data may be audio data. For another example, when the satellite paging operation is used to send an SMS message, the communication data may indicate information content of the SMS message.

Step 708: The first electronic device invokes the satellite communication capability of the second electronic device based on the first communication link to send a first satellite communication packet to the satellite on the satellite link established between the first electronic device and the satellite. The satellite communication capability includes a signal modulation capability and a satellite antenna capability.

In a possible scenario, the second electronic device may be in a standby state or a power-off state, and may further indicate, by invoking the satellite communication capability of the second electronic device, the second electronic device to be powered on. In this way, the second electronic device is in a standby state or a power-off state, so that power consumption of the second electronic device and/or the vehicle can be reduced.

For example, the satellite communication packet may be used by the first electronic device to initiate paging to a third electronic device. In this scenario, the satellite communication packet may include a paging number identifier of the called party, and may further include a paging number identifier of the calling party.

In addition, it should be understood that, for an implementation process in which the first electronic device transmits call audio data to the third electronic device after the first electronic device establishes a call with the third electronic device, reference may also be made to the content described in step 708. In this scenario, in addition to the paging number identifier of the called party, the satellite communication packet may further include the paging number identifier of the calling party and the call audio data.

For another example, the satellite communication packet may be used by the first electronic device to send an SMS message to a third electronic device. In this scenario, the satellite communication packet may include an identifier of an SMS message recipient, may further include an identifier of an SMS message sender, and may further include information content of the SMS message.

In an optional embodiment, after modulating, by invoking the satellite communication capability of the second electronic device, the satellite communication packet encapsulated by the first electronic device, the first electronic device sends the modulated satellite communication packet to the satellite via the satellite antenna.

The first electronic device invokes the satellite communication capability of the second electronic device, so that the satellite antenna of the second electronic device can be used as distributed virtualized hardware of the first electronic device. Therefore, the first electronic device can implement communication with the satellite on the satellite link between the first electronic device and the satellite, and satellite communication scenarios of the first electronic device can be expanded.

Step 709: The satellite sends a paging request to the third electronic device, where the third electronic device is an electronic device of the called party.

In a possible scenario, the satellite may send the paging request to the third electronic device through a satellite communication network. For example, the satellite sends the paging request to a satellite ground information processing center; the satellite ground information processing center determines, based on an identifier of the called party included in the paging request, a target satellite that establishes a connection to the electronic device of the called party; the satellite ground information processing center sends the paging request to the target satellite; and the target satellite sends the paging request to the electronic device of the called party.

In another possible scenario, the satellite may also send the paging request to the third electronic device through a terrestrial communication network. For example, the satellite sends the paging request to a satellite ground information processing center; the satellite ground information processing center determines, based on an identifier of the called party included in the paging request, a server that establishes a connection to the electronic device of the called party; the satellite ground information processing center sends the paging request to the server; and the server sends the paging request to the electronic device of the called party.

Step 710: The third electronic device detects a paging accept operation. For example, the paging accept operation may be that the third electronic device detects a tap operation performed by the user on a call connection control.

It may be understood that when the paging request of the first electronic device is used to send an SMS message to the third electronic device, the third electronic device may no longer perform processing in step 710 and step 711.

Step 711: Transmit the call audio data between the third electronic device and the first electronic device via the intelligent cockpit, the second electronic device, and the satellite. The first electronic device communicates with the satellite based on the first communication link by invoking the satellite communication capability of the second electronic device. For a specific implementation process, refer to a paging request transmission process. Details are not described herein again. In addition, the satellite communicates with the third electronic device through a satellite communication network or another communication network. In a scenario in which communication is performed through the satellite communication network, for a specific implementation process, refer to content described in the following scenario B or an implementation process of an existing satellite communication network. For the another communication network, refer to an implementation process of another existing communication network. Details are not described herein.

According to the procedure described in FIG. 7A and FIG. 7B, the satellite communication capability of the first electronic device can be enhanced based on the distributed communication network between the first electronic device and the second electronic device and the satellite communication capability of the second electronic device, where the distributed communication network between the first electronic device and the second electronic device may be established by using at least one device such as the intelligent cockpit as a relay, or may be directly established. Based on portability of the first electronic device, a user can implement satellite communication within a satellite signal receiving/sending range of the second electronic device, so that a user inside or outside the vehicle can perform an operation, and privacy of satellite communication can be improved.

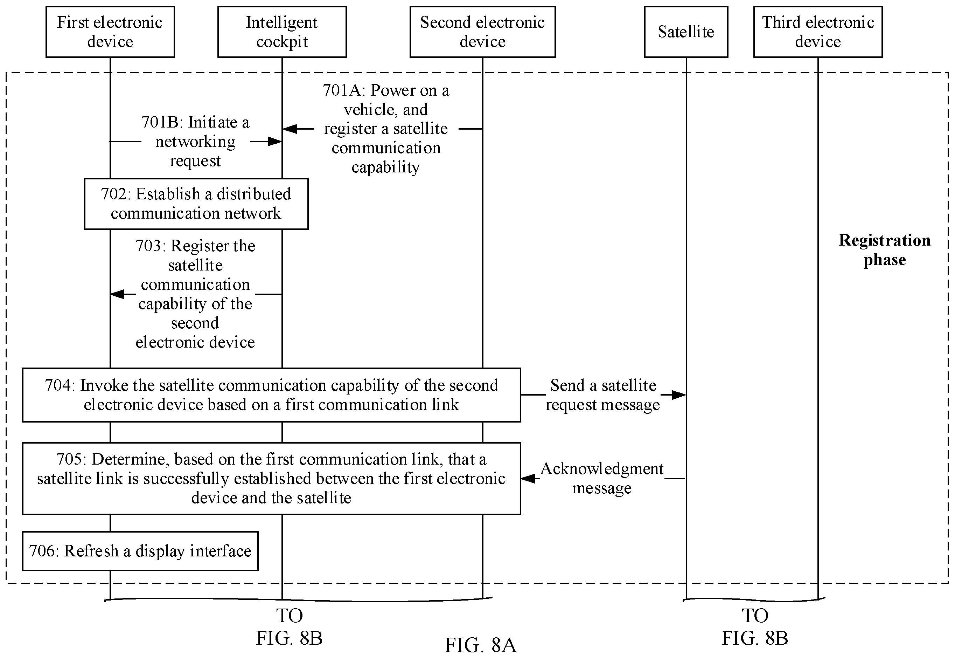

Scenario B: Called scenario. For example, FIG. 8A and FIG. 8B are a diagram of a procedure of a satellite communication method according to an embodiment of this application. The procedure may also mainly include two phases: a registration phase and a satellite communication phase. The registration phase may be used to establish a distributed communication network between a plurality of devices; and implement registration of the satellite communication capability of the second electronic device with the first electronic device, where the satellite communication capability is used as a distributed virtualized hardware structure of the first electronic device. The satellite communication phase may be used to implement satellite communication between the first electronic device and the satellite based on an implementation process of the registration phase. The procedure may include the following steps.

### (1) Registration phase

Step 701A: The vehicle is powered on, and the second electronic device registers a satellite communication capability with the intelligent cockpit.

Step 701B: The first electronic device initiates a networking request to the intelligent cockpit.

Step 702: The first electronic device establishes a distributed communication network with the intelligent cockpit, which may also be understood as establishing a communication link.

Step 703: The intelligent cockpit registers the satellite communication capability of the second electronic device with the first electronic device through the distributed communication network.

Step 704: The first electronic device invokes the satellite communication capability of the second electronic device based on the first communication link, to send a satellite request message to the satellite, where the satellite request message is used to request to establish a satellite link with the satellite, which may also be understood as a satellite searching operation, and

Step 705: When receiving an acknowledgment message from the satellite based on the first communication link by using the satellite communication capability of the second electronic device, the first electronic device determines that the satellite link is successfully established between the first electronic device and the satellite, which may also be understood as a satellite locking operation.

Step 706: The first electronic device refreshes a display interface based on the acknowledgment message of the satellite.

For a specific implementation process of step 701A to step 706, refer to the content described in the scenario A. Details are not described again in this scenario.

### (2) Satellite communication phase

Optionally, in step 800, the intelligent cockpit or the first electronic device triggers enabling of the satellite communication capability of the second electronic device.

In consideration of problems such as power consumption, the second electronic device may be in a standby state or a power-off state. Therefore, in a scenario in which the first electronic device performs receiving from a called party by using the satellite communication capability of the second electronic device, the second electronic device needs to be triggered to be powered on, to ensure that a satellite signal can be normally received.

In a possible scenario, the user may control, by performing a manual operation on the intelligent cockpit, a function of enabling the satellite communication capability of the second electronic device.

In another possible scenario, based on the first communication link between the first electronic device and the second electronic device, the user may also control, by performing a manual operation on the first electronic device, enabling of the satellite communication capability of the second electronic device. For example, on the first electronic device, an entry of enabling satellite communication may be displayed in any interface. When detecting a manual operation of enabling satellite communication by the user, the first electronic device may control enabling of the satellite communication capability of the second electronic device. The any interface is, for example, an interface of a settings APP, an interface of an AI life APP, or a notification bar interface.

Step 801: A third electronic device detects a paging operation, and initiates a paging request. The paging request may include a paging number identifier of a called party, that is, a first user identifier corresponding to the first electronic device; and may further include a paging number identifier of a calling party, that is, a third user identifier corresponding to the third electronic device.

In a possible scenario, the third electronic device may initiate a satellite call. For a specific implementation, refer to an implementation process of the first electronic device described in the scenario A. Details are not described herein again. Alternatively, the third electronic device may initiate a cellular network call. For a specific implementation, refer to an implementation in the conventional technology. Details are not described herein.

Step 802: The third electronic device sends the paging request to the satellite, where the satellite is a satellite connected to the first electronic device.

In a possible scenario, the third electronic device initiates satellite communication, and the third electronic device may send the paging request via a connected satellite. The satellite connected to the third electronic device may send the paging request to a satellite ground information processing center; the satellite ground information processing center determines, based on the first user identifier included in the paging request, a satellite that establishes a connection to the first electronic device; the satellite ground information processing center sends the paging request to the satellite that establishes the connection to the first electronic device; and the satellite that establishes the connection to the first electronic device sends the paging request to the first electronic device.

In another possible scenario, the third electronic device initiates a cellular network call, and the third electronic device may send the paging request via a connected server. The server connected to the third electronic device may send the paging request to a satellite ground information processing center; the satellite ground information processing center determines, based on the first user identifier included in the paging request, a satellite that establishes a connection to the first electronic device; the satellite ground information processing center sends the paging request to the satellite that establishes the connection to the first electronic device; and the satellite that establishes the connection to the first electronic device sends the paging request to the first electronic device.

Step 803: The first electronic device receives a second satellite communication packet based on the first communication link by invoking the satellite communication capability of the second electronic device; and correspondingly, the satellite sends the second satellite communication packet to the first electronic device.

For example, the first electronic device may receive the first satellite communication packet from the satellite by using the satellite communication capability of the second electronic device. The first electronic device first receives the first satellite communication packet from the satellite by using the satellite antenna capability included in the satellite communication capability of the second electronic device; and then the first electronic device obtains the second satellite communication packet after demodulating the first satellite communication packet by using the signal demodulation capability included in the satellite communication capability of the second electronic device. Therefore, the first electronic device can obtain the demodulated satellite communication packet based on the first communication link. Finally, the first electronic device decapsulates the demodulated satellite communication packet to obtain communication data.

Step 804: The first electronic device displays a second interface (for example, a "called interface") and/or rings based on communication data indicated by the first satellite packet.

Step 805: The first electronic device detects a paging accept operation. The called interface may display a satellite number of a calling party, or may display a cellular network number of a calling party. This is not limited in this application.

Step 806: Transmit call audio data between the first electronic device and the third electronic device in response to the paging accept operation via the intelligent cockpit, the second electronic device, and the satellite. The first electronic device communicates with the satellite based on the first communication link by using the satellite communication capability of the second electronic device. For a specific implementation process, refer to a paging request transmission process. Details are not described herein again. In addition, the satellite communicates with the third electronic device through a satellite communication network or another communication network. In a scenario in which communication is performed through the satellite communication network, for a specific implementation process, refer to content described in the following scenario B or an implementation process of an existing satellite communication network. For the another communication network, refer to an implementation process of another existing communication network. Details are not described herein.

According to the procedure described in FIG. 8A and FIG. 8B, the satellite communication capability of the first electronic device can be enhanced based on the distributed communication network between the first electronic device and the second electronic device and the satellite communication capability of the second electronic device, where the distributed communication network between the first electronic device and the second electronic device may be established by using at least one device such as the intelligent cockpit as a relay, or may be directly established. Based on portability of the first electronic device, a user can implement satellite communication within a satellite signal receiving/sending range of the second electronic device, so that a user inside or outside the vehicle can perform an operation, and privacy of satellite communication can be improved.

It should be noted that, for other satellite communication scenarios such as receiving/sending a satellite SMS message, refer to the satellite call scenarios described in the foregoing scenario A and scenario B. The other satellite communication scenarios are not described again in this application.

According to the method provided in embodiments of this application, the satellite communication capability of the second electronic device is used as a distributed satellite communication capability of the first electronic device, so that the first electronic device can have the same satellite communication capability as the second electronic device. For example, in a scenario in which the satellite communication capability of the second electronic device includes an omnidirectional satellite communication capability, the first electronic device may also have an omnidirectional satellite communication capability, so that a user does not need to perform a manual operation such as satellite alignment on the first electronic device, and satellite communication can be performed in various device postures without limiting a device posture of the first electronic device. Therefore, the method can improve portability of satellite communication, and can further improve privacy of satellite communication, thereby extending application scenarios in which the first electronic device performs satellite communication.

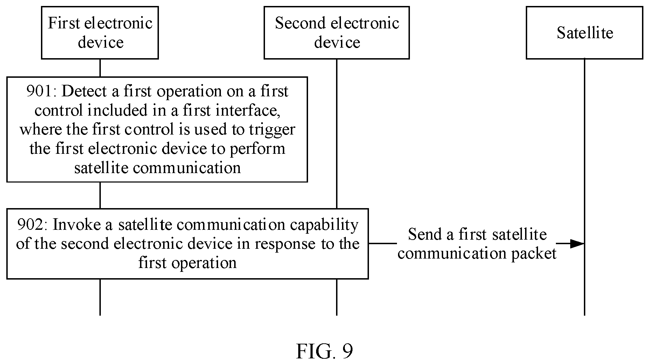

In another possible embodiment, FIG. 9 is another diagram of a procedure of a satellite communication method according to an embodiment of this application. The method may be applied to a first electronic device, and the procedure may include the following steps.

Step 901: Detect a first operation on a first control included in a first interface, where the first control is used to trigger the first electronic device to perform satellite communication. The first interface may be, for example, the interface 500B shown in FIG. 5B, the first control may be, for example, the control 503 shown in the interface 500B, and the first operation may be, for example, a dialing operation.

Step 902: Invoke a satellite communication capability of a second electronic device in response to the first operation to send a first satellite communication packet to a satellite on a satellite link established between the first electronic device and the satellite, where the satellite communication capability includes a signal modulation capability and a satellite antenna capability. For example, the first electronic device may invoke the satellite communication capability of the second electronic device through a first communication link, where the first communication link may be a distributed communication network directly established between the first electronic device 200A and the second electronic device 200B shown in FIG. 4, or may be a distributed communication network indirectly established between the first electronic device 200A and the second electronic device 200B via the intelligent cockpit 401 shown in FIG. 6.

Based on the foregoing embodiments, this application further provides an electronic device. The electronic device includes a plurality of functional modules, and the plurality of functional modules interact with each other, to implement functions performed by the electronic device in the methods described in embodiments of this application. The plurality of functional modules may be implemented based on software, hardware, or a combination of software and hardware, and the plurality of functional modules may be randomly combined or divided based on a specific implementation. For example, step 701B, step 702 to step 708, and step 711 that are performed by the first electronic device in the embodiment shown in FIG. 7A and FIG. 7B are performed; and for another example, step 701B, step 702 to step 706, step 800, and step 803 to step 806 that are performed by the first electronic device in the embodiment shown in FIG. 8A and FIG. 8B are performed. Alternatively, step 901 and step 902 that are performed by the first electronic device in the embodiment shown in FIG. 9 are performed.

Based on the foregoing embodiments, this application further provides an electronic device. The electronic device includes at least one processor and at least one memory. The at least one memory stores computer program instructions. When the electronic device runs, the at least one processor performs functions performed by the electronic device in the methods described in embodiments of this application. For example, step 701B, step 702 to step 708, and step 711 that are performed by the first electronic device in the embodiment shown in FIG. 7A and FIG. 7B are performed; and for another example, step 701B, step 702 to step 706, step 800, and step 803 to step 806 that are performed by the first electronic device in the embodiment shown in FIG. 8A and FIG. 8B are performed. Alternatively, step 901 and step 902 that are performed by the first electronic device in the embodiment shown in FIG. 9 are performed.

Based on the foregoing embodiments, this application further provides a satellite communication system. The system may include the first electronic device and the second electronic device in the foregoing embodiments. In a possible scenario, the system may further include an intelligent cockpit. For processing of the first electronic device, the second electronic device, and the intelligent cockpit, refer to the content described in the foregoing embodiments.

Based on the foregoing embodiments, this application further provides a computer program product. The computer program product includes a computer program (which may also be referred to as code or instructions). When the computer program runs, a computer is enabled to perform the methods described in embodiments of this application.

Based on the foregoing embodiments, this application further provides a computer-readable storage medium. The computer-readable storage medium stores a computer program. When the computer program is executed by a computer, the computer is enabled to perform the methods described in embodiments of this application.

Based on the foregoing embodiments, this application further provides a chip. The chip is configured to read a computer program stored in a memory, to implement the methods described in embodiments of this application.

Based on the foregoing embodiments, this application provides a chip system. The chip system includes a processor, configured to support a computer apparatus in implementing the methods described in embodiments of this application. In a possible design, the chip system further includes a memory, and the memory is configured to store a program and data that are necessary for the computer apparatus. The chip system may include a chip, or may include a chip and another discrete component. A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more procedures in the flowcharts and/or in one or more blocks in the block diagrams.

These computer program instructions may be stored in a computer-readable memory that can instruct the computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

Alternatively, the computer program instructions may be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the protection scope of this application. This application is intended to cover these modifications and variations of this application provided that they fall within the scope of protection defined by the following claims and their equivalent technologies.

## Claims

1. A satellite communication method, applied to a first electronic device, wherein the method comprises:
detecting a first operation on a first control comprised in a first interface, wherein the first control is used to trigger the first electronic device to perform satellite communication; and
sending, in response to the first operation on a satellite link established between the first electronic device and a satellite, a first satellite communication packet to the satellite by invoking a satellite communication capability of a second electronic device, wherein the satellite communication capability comprises a signal modulation capability and a satellite antenna capability.

2. The method according to claim 1, wherein a frequency range supported by the signal modulation capability of the second electronic device is greater than a frequency range supported by a signal modulation capability of the first electronic device; and/or a satellite signal receiving/sending range supported by the satellite antenna capability of the second electronic device is greater than a satellite signal receiving/sending range supported by a satellite antenna capability of the first electronic device.

3. The method according to claim 1 or 2, wherein sending, in response to the first operation on the satellite link established between the first electronic device and the satellite, the first satellite communication packet to the satellite by invoking the satellite communication capability of the second electronic device comprises:
obtaining communication data in response to the first operation;
encapsulating the communication data to obtain the first satellite communication packet; and
after modulating the first satellite communication packet by using the signal modulation capability, sending the first satellite communication packet to the satellite via the satellite antenna.

4. The method according to any one of claims 1 to 3, wherein before detecting the first operation on the first control comprised in the first interface, the method further comprises:
establishing a first communication link with the second electronic device; and
receiving first indication information from the second electronic device based on the first communication link, wherein the first indication information is used to register the satellite communication capability with the first electronic device.

5. The method according to claim 4, wherein the method further comprises:
sending a satellite request message to the satellite based on the first communication link by invoking the satellite communication capability of the second electronic device, wherein the satellite request message is used to request to establish the satellite link with the satellite; and
when receiving an acknowledgment message from the satellite based on the first communication link by using the satellite communication capability of the second electronic device, determining that the satellite link is successfully established between the first electronic device and the satellite.

6. The method according to claim 4 or 5, wherein establishing the first communication link with the second electronic device comprises:
establishing a second communication link with an intelligent cockpit, wherein a third communication link is established between the intelligent cockpit and the second electronic device, and the first communication link comprises the second communication link and the third communication link; and
receiving the first indication information from the second electronic device based on the first communication link comprises:
receiving an indication message from the intelligent cockpit through the second communication link, and obtaining the first indication information from the indication message, wherein the first indication information is received by the intelligent cockpit through the third communication link.

7. The method according to any one of claims 1 to 6, wherein the method further comprises:
detecting successful establishment of the satellite link, and displaying the first interface in response to the successful establishment.

8. The method according to any one of claims 1 to 7, wherein
the first interface further comprises prompt information, and the prompt information comprises one or a combination of the following information: second indication information indicating that the satellite link is successfully established, information about a quantity of locked satellites, and satellite signal strength information.

9. The method according to any one of claims 1 to 8, wherein
the first interface is a dialing interface, the dialing interface comprises the first control, and the first control indicates to perform a satellite call.

10. The method according to claim 9, wherein
the dialing interface further comprises a second control, and the second control indicates to perform a cellular network call.

11. The method according to any one of claims 1 to 10, wherein the satellite communication capability further comprises a signal demodulation capability, and the method further comprises:
receiving a second satellite communication packet from the satellite on the satellite link by using the satellite communication capability of the second electronic device, wherein the second satellite communication packet is a packet received via the satellite antenna and demodulated by using the signal demodulation capability; and
displaying a second interface based on the second satellite communication packet, wherein the second interface is used to display information indicated by the second satellite communication packet.

12. The method according to claim 11, wherein displaying the second interface based on the second satellite communication packet comprises:
decapsulating the second satellite communication packet to obtain communication data; and
displaying the second interface based on the communication data.

13. A satellite communication system, wherein the system comprises a first electronic device and a second electronic device;
the first electronic device is configured to detect a first operation on a first control comprised in a first interface, wherein the first control is used to trigger the first electronic device to perform satellite communication;
the first electronic device is further configured to invoke a satellite communication capability of the second electronic device in response to the first operation; and
the second electronic device is configured to send, in response to invocation of the first electronic device, a first satellite communication packet to a satellite 2 on a satellite link established between the first electronic device and the satellite, wherein the satellite communication capability comprises a signal modulation capability and a satellite antenna capability.

14. The system according to claim 13, wherein a frequency range supported by the signal modulation capability of the second electronic device is greater than a frequency range supported by a signal modulation capability of the first electronic device; and/or a satellite signal receiving/sending range supported by the satellite antenna capability of the second electronic device is greater than a satellite signal receiving/sending range supported by a satellite antenna capability of the first electronic device.

15. The system according to claim 13 or 14, wherein before the first operation on the first control comprised in the first interface is detected,
the first electronic device is further configured to establish a first communication link with the second electronic device;
the second electronic device is further configured to send first indication information to the first electronic device based on the first communication link, wherein the first indication information is used to register the satellite communication capability with the first electronic device; and
the first electronic device is further configured to receive the first indication information from the second electronic device based on the first communication link.

16. The system according to claim 15, wherein the system further comprises an intelligent cockpit; that the first electronic device is configured to establish the first communication link with the second electronic device comprises: the intelligent cockpit is configured to establish a third communication link with the second electronic device, the first electronic device is further configured to establish a second communication link with the intelligent cockpit, and the first electronic device is further configured to obtain the first communication link based on the third communication link and the second communication link;
that the second electronic device is configured to send the first indication information to the first electronic device based on the first communication link comprises: the second electronic device is configured to send the first indication information to the intelligent cockpit based on the third communication link, the intelligent cockpit is configured to receive the first indication information from the second electronic device based on the third communication link, and the intelligent cockpit is further configured to send an indication message to the first electronic device based on the first indication information and the second communication link, wherein the indication message comprises the first indication information from the second electronic device; and
that the first electronic device is configured to receive the first indication information from the second electronic device based on the first communication link comprises: the first electronic device is configured to receive the indication message from the intelligent cockpit based on the second communication link, and the first electronic device is further configured to obtain the first indication information from the indication message.

17. The system according to any one of claims 13 to 16, wherein the satellite communication capability further comprises a signal demodulation capability;
the second electronic device is further configured to: receive a second satellite communication packet from the satellite on the satellite link via the satellite antenna, and demodulate the second satellite communication packet by using the signal demodulation capability; and
the first electronic device is further configured to: receive the second satellite communication packet from the second electronic device, and display a second interface based on the second satellite communication packet, wherein the second interface is used to display information indicated by the second satellite communication packet.

18. An electronic device, comprising at least one processor, wherein the at least one processor is coupled to at least one memory, and the at least one processor is configured to read a computer program stored in the at least one memory, to perform the method according to any one of claims 1 to 12.

19. A satellite communication system, comprising the electronic device according to claim 18 and a second electronic device, wherein the second electronic device has a satellite communication capability, and the satellite communication capability comprises a signal modulation capability and a satellite antenna capability.

20. The system according to claim 19, further comprising an intelligent cockpit.

21. The system according to claim 19 or 20, wherein the second electronic device is a telematics box having satellite communication.

22. A computer-readable storage medium, wherein the computer-readable storage medium stores instructions; and when the instructions are run on a computer, the computer is enabled to perform the method according to any one of claims 1 to 12.

23. A computer program product comprising instructions, wherein when the computer program product runs on a computer, the computer is enabled to perform the method according to any one of claims 1 to 12.
